# EUROPÄISCHE PATENTSCHRIFT

(11) **EP 2 671 288 B1**
(45) Veröffentlichungstag und Bekanntmachung des Hinweises auf die Patenterteilung: **31.08.2016**
(21) Anmeldenummer: 12703066.6
(22) Anmeldetag: 02.02.2012
(51) Int. Cl.: H01R 9/03

(54) **DEZENTRAL GESTEUERTE FÖRDERVORRICHTUNG MIT BUSKOMMUNIKATION**
CONVEYING DEVICE CONTROLLED IN A DECENTRALIZED MANNER AND HAVING BUS COMMUNICATION
DISPOSITIF DE TRANSPORT COMMANDÉ DE FAÇON DÉCENTRALISÉE À COMMUNICATION PAR BUS

(30) Priorität: 02.02.2011 DE 202011002288 U
(43) Veröffentlichungstag der Anmeldung: 11.12.2013
(73) Patentinhaber: Interroll Holding AG, 6592 Sant' Antonino (CH)
(72) Erfinder: HEINEN, Daniel, CH-6592 S. Antonino (CH)
(74) Vertreter: Eisenführ Speiser
(86) Internationale Anmeldenummer: PCT/EP2012/051748
(87) Internationale Veröffentlichungsnummer: WO 2012/104370

(56) Entgegenhaltungen:
- EP-A1- 0 419 031
- EP-A1- 0 891 008
- EP-A2- 0 613 210
- WO-A1-2007/036421
- WO-A2-2006/102691
- DE-A1- 4 403 132
- DE-A1- 19 959 536

## Beschreibung

Die Erfindung betrifft eine Fördervorrichtung, umfassend mehrere Förderzonen mit jeweils einem Förderantrieb zum Erzeugen einer Förderkraft auf einen in der Förderzone befindlichen Gegenstand und einem Sensor zum Erfassen eines Gegenstands in der Förderzone, eine Mehrzahl von Steuerungseinheiten, wobei jede Steuerungseinheit zumindest einer Förderzone zugeordnet ist und mit dem Sensor der Förderzone signaltechnisch gekoppelt ist zum Empfangen von Signalen, welche das Vorhandensein eines Gegenstands in der Förderzone signalisieren, und mit dem Förderantrieb signaltechnisch gekoppelt ist zum Ansteuern des Förderantriebs und eine Datenbusleitung, welche die Steuerungseinheiten miteinander verbindet.

Ein weiterer Aspekt der Erfindung ist ein Verfahren zum Fördern von Gegenständen.

Fördervorrichtungen dieser Bauweise werden dazu verwendet, um in Logistiksystemen Förderaufgaben, Lageraufgaben, Verteil- und Sortieraufgaben zu übernehmen. In der Fertigungstechnik kommen Fördervorrichtungen dieser Art zum Einsatz, um Bauteile zu Arbeitsstationen zuzuliefern, in einem fortschreitenden Montagevorgang für die Förderung zu sorgen und fertig gestellte Produkte in ein Lager zu bewegen.

Grundsätzlich werden für solche Aufgaben Fördervorrichtungen eingesetzt, die sich durch einen komplexen Aufbau auszeichnen, indem zahlreiche Ein- und Ausschleusungen, Verzweigungen, Kreuzungen und dgl. auftreten, wobei häufig auf einer oder mehr als einer Ebene die Fördervorgänge ablaufen. Um in solchen Fördervorrichtungen einen störungsfreien und zugleich für die geförderten Gegenstände beschädigungsfreien Betrieb zu gewährleisten, werden diese Fördervorrichtungen häufig im so genannten staudrucklosen Betrieb betrieben. Bei dieser Betriebsweise wird durch eine gezielte Ansteuerung der einzelnen Förderantriebe der Fördervorrichtung und unter Auswertung der Sensordaten die Gegenstände so gefördert, dass sie nicht in Kontakt zueinander treten.

Um Fördervorrichtungen mit einem solchen Aufbau für individuelle und von gefördertem Gegenstand zu gefördertem Gegenstand variierende Aufgaben anzusteuern und um eine staudrucklose Förderung umzusetzen, werden Fördervorrichtungen der eingangs genannten Art typischerweise in eine Vielzahl von Förderzonen unterteilt. Jede Förderzone zeichnet sich dabei dadurch aus, dass sie mindestens einen Förderantrieb, der für die Förderung eines Gegenstands in der Förderzone sorgt und einen Sensor verfügt, der die Anwesenheit eines Gegenstands in der Förderzone erfassen kann. Ein typischer Fördermodus für einen staudrucklosen Betrieb besteht dann in dem so genannten Blockabzug, bei dem einander benachbarte Förderzonen, in denen jeweils ein Gegenstand angeordnet ist, simultan zur Förderung angesteuert werden, um die Kette von Gegenständen unter Beibehaltung ihres Abstands voneinander durch diese Förderzonen hindurch zu fördern. Ein anderer Fördermodus für den staudrucklosen Betrieb besteht im so genannten Einzelplatzabzug, bei dem eine Förderzone zur Förderung eines darin befindlichen Gegenstands immer dann angesteuert wird, wenn die stromabwärts gelegene Förderzone keinen Gegenstand beinhaltet. Der Einzelplatzabzug zeichnet sich durch periodisch variierende Abstände zwischen den Gegenständen aus, die sich auf der Förderstrecke befinden.

Fördervorrichtungen dieser Bauweise sind beispielsweise aus EP 1 590 275 B1 und US 6,253,909 B1 bekannt. Diese Fördervorrichtungen weisen ein System aus einer Vielzahl von Förderzonen auf, die miteinander Daten austauschen können, um die individuellen Ansteuerungsvorgänge für jede Förderzone zu realisieren. EP 1 590 275 B1 weist zu diesem Zweck ein hierarchisches System auf, bei dem eine übergeordnete Steuerungseinheit mehrere untergeordnete Steuerungseinheiten ansteuert. Auch in US 6,253,909 B1 ist ein solches Steuerungssystem mit einer übergeordneten Steuerungseinheit und einer Vielzahl von untergeordneten Steuerungseinheiten, die von dieser übergeordneten Steuerungseinheit angesteuert werden, vorbekannt. Nachteilig an diesen Systemen ist, dass eine zentrale und den Ablauf unabdingbare Steuerungseinheit _ vorgesehen ist, bei deren Ausfall oder teilweisen Defekt die gesamte Fördervorrichtung in der Regel nicht mehr funktionsfähig ist.

Aus EP 1 071 623 B1 ist ein Fördersystem bekannt, bei dem mehrere Steuerungseinheiten eingesetzt werden und durch Wiederholung von Steuerinformationen eine höhere Ausfallsicherheit in Bezug auf die Datenkommunikation erreicht werden soll. Nachteilig an diesem System ist allerdings, dass innerhalb des Gesamtsystems eine Vielzahl von Daten versendet und wiederholt werden müssen, wodurch die Geschwindigkeit der Datenübertragung beeinträchtigt wird bzw. eine hohe Datenübertragungskapazität und damit hohe Kosten erforderlich werden, um eine gewünschte Geschwindigkeit zu erzielen.

Auch aus WO 2006/102691 A2 ist eine dezentrale Kommunikation innerhalb einer Fördervorrichtung vorbekannt.

WO 2007/036421 A1 offenbart eine gattungsgemäße Rollentransporteinrichtung, die einen Rollenantrieb aufweist. Der Rollenantrieb umfasst eine elektrische Maschine und eine Anschlussvorrichtung für den Rollenantrieb. Die Anschlussvorrichtung dient dem Anschluss eines Datenbusses und eines Leistungsbusses. Als Datenbus kann eine Flachbandleitung verwendet werden. Zum Anschluss der Busse sind Piercingkontakte vorgesehen, die durch einen Isolierkörper voneinander getrennt sind.

Fördervorrichtungen der solcherart beschriebenen und vorbekannten Bauweise werden häufig für eine jeweilige individuelle Anwendungssituation spezifisch konfiguriert. Diese Konfiguration besteht einerseits in der Abmessung, d.h. der Länge einzelner Förderstrecken, andererseits in der Art der Verzweigung, d.h. der Anzahl und Anordnung von Einund Ausschleusungen, der Anzahl parallel betriebener Förderstrecken, Kreuzungen und dgl. Unmittelbar folgend aus dieser individuellen Konfiguration ist die Anzahl und Anordnung der Förderzonen in einer solchen Fördervorrichtung. Nicht selten erreichen Fördervorrichtungen für mittlere bis große Einsatzzwecke eine Anzahl von hundert Förderzonen oder mehr.

Diese individuelle Konfiguration erfordert einerseits im Hinblick auf die Zuverlässigkeit der Datenkommunikation eine aufwändige und fehlersichere Kommunikation zwischen den einzelnen Förderzonen. Es ist bekannt, Förderzonen mit jeweils einer Steuerungseinheit auszurüsten, so dass die Anzahl der Steuerungseinheiten der Anzahl der Förderzonen entspricht und alle Steuerungseinheiten mit einem zentralen Steuerungsrechner zur Ansteuerung jeder einzelnen Förderzone signaltechnisch zu verbinden. Auf diese Weise ergibt sich eine sternförmige Kommunikationsarchitektur, die eine Vielzahl von Datenverbindungen erfordert. Typischerweise wird diese Datenverbindung durch ein signalübertragendes Kabel bewirkt, welches entsprechend konfektioniert ist, um es an seinen Enden mit dem zentralen Steuerungsrechner bzw. der Steuerungseinheit zuverlässig verbinden zu können.

Um den Verkabelungsaufwand insgesamt zu reduzieren, ist es ebenfalls bekannt, die Steuerungseinheiten untereinander mittels einer Bustechnik zu verbinden. Hierdurch wird vermieden, dass jede Steuerungseinheit mittels einer eigenen Datenübertragung mit der zentralen Steuerungseinheit direkt verbunden werden muss. Stattdessen wird eine Kommunikation über den Bus, an den sämtliche Steuerungseinheiten angebunden sind, durchgeführt. Unter einer solchen Datenbustechnik wird eine Art der Datenkommunikation generell verstanden, bei der mehrere Peripheriegeräte, wie hier Steuerungseinheiten, an einer gemeinsamen Datenleitung angeschlossen sind und die individuelle Ansteuerung einer einzelnen aus der Vielzahl der Steuerungseinheiten durch Vergabe von Busadressen erfolgt, die jeden in einem Datenpaket enthaltenen Steuerungsbefehl für eine individuelle Steuerungseinheit innerhalb des Datenpakets als Adressblock vorangestellt werden, um die gewünschte, individuelle Steuerungseinheit mit diesem Adressblock anzusprechen und ihr den entsprechenden Befehl innerhalb dieses Datenblocks zu übermitteln.

Nachteilig an solchen busbasierten Steuerungssystemen ist, dass der Abstand zwischen zwei einzelnen Steuerungseinheiten keineswegs stets der gleiche ist. Es ist daher erforderlich, eine Vielzahl vorkonfektionierter Busleitungsabschnitte mit jeweils beidseitig angeordneten Anschlusssteckern bereitzuhalten, um individuell konfigurierte Fördervorrichtungen zu verkabeln oder es ist nötig, die Busleitungen individuell zu konfigurieren, was zeitaufwändig und kostenintensiv ist.

Eine weitere grundsätzliche Anforderung an Fördervorrichtungen der eingangs genannten Art besteht darin, dass eine zwar einerseits sichere und zuverlässige Montage der Fördervorrichtung möglich sein muss, bei der fehlerhafte oder unvollständige Anschlussweisen möglichst zuverlässig ausgeschlossen werden können. Dies ist erforderlich, um auch bei komplexen Fördervorrichtungen zu gewährleisten, dass eine Inbetriebnahme ohne aufwändige Fehlersuche nach einer einzelnen schlecht ausgeführten Steckverbindung möglich wird. Zum anderen ist es jedoch wünschenswert, die Kosten für die Konfiguration und Installation möglichst niedrig zu halten, um die Wirtschaftlichkeit des gesamten Logistiksystems sicherzustellen. Eine weitere, im Zuge der Dynamisierung der Produktwechselintervalle und der Notwendigkeit der Anpassung an veränderte Marktverhältnisse in ihrer Bedeutung zunehmende Forderung an Fördervorrichtungen besteht darin, dass sie unter möglichst geringem Aufwand erweitert, in einzelnen Bestandteilen modifiziert und angepasst werden können.

Der Erfindung liegt die Aufgabe zugrunde, eine Fördervorrichtung bereitzustellen, welche unter diesen teils gegensätzlichen Anforderungen eine insgesamt für den Benutzer besser nutzbare und wirtschaftlichere Installations- und Funktionsweise erzielt.

Diese Aufgabe wird erfindungsgemäß gelöst, indem bei einer Fördervorrichtung der eingangs genannten Art jede Steuerungseinheit eine Anschlussvorrichtung für eine Busleitung aufweist und die Anschlussvorrichtung eine Querschnittsausnehmung umfasst, in deren Bereich ein erster und ein zweiter elektrischer Kontaktstift angeordnet ist, die ausgebildet sind, um zwischen einem entsprechend ersten und zweiten Leiter einer in die Querschnittsausnehmung eingelegten Datenbusleitung und der Steuerungseinheit einen elektrischen Kontakt herzustellen, indem eine isolierende Hülle der Datenbusleitung von den Kontaktstiften im Bereich der Querschnitssausnehmung soweit durchdringbar ist, dass der erste elektrische Kontaktstift mit dem ersten Leiter und der zweite elektrische Kontaktstift mit dem zweiten Leiter der Datenbusleitung in elektrischen Kontakt tritt, und die Datenbusleitung eine Kabelquerschnittsgeometrie aufweist, welche in eine Querschnittsausnehmung an der Steuerungseinheit solcherart einlegbar ist, dass die Kabelquerschnittsgeometrie und die Querschnittsausnehmung eine Ausrichtung der Datenbusleitung in der Querschnittsausnehmung definiert und hierdurch ein verpolungssicherer Kontakt zwischen dem ersten Kontaktstift und dem ersten Leiter und zwischen dem zweiten Kontaktstift und dem zweiten Leiter hergestellt ist.

Mit der erfindungsgemäßen Fördervorrichtung wird eine in mehrere Förderzonen unterteilte Fördervorrichtung bereitgestellt. Jede Förderzone weist einen oder mehrere Förderantriebe sowie einen oder mehrere Sensoren zum Erfassen eines Gegenstands in der Förderzone auf. Als ein solcher Förderantrieb kommt beispielsweise eine angetriebene Förderrolle in Betracht, als Sensor kann insbesondere eine Lichtschranke zum Einsatz kommen.

Weiterhin sind mehrere Steuerungseinheiten vorgesehen, wobei insbesondere jede Steuerungseinheit genau einer Förderzone zugeordnet ist, alternativ hierzu aber auch jede Steuerungseinheit genau zwei Förderzonen oder mehr als zwei Förderzonen zugeordnet sein kann. Die Zuordnung einer Steuerungseinheit zu einer oder mehreren Förderzonen bedeutet insbesondere, dass der oder die Förderantriebe und der oder die Sensoren der Förderzone oder der Mehrzahl von Förderzonen mit der Steuerungseinheit so verbunden sind, dass Signale zwischen der Steuerungseinheit und dem Förderantrieb bzw. Sensor ausgetauscht werden können.

Die solcherart bereitgestellten mehreren Steuerungseinheiten sind über eine spezielle Datenbusleitung miteinander zur Ansteuerung der Steuerungseinheiten verbunden. Diese Verbindung wird erzielt, indem zwei elektrische Kontaktstifte im Bereich einer Querschnittsausnehmung an der Steuerungseinheit vorgesehen sind. Diese Kontaktstifte sind solcherart ausgeführt, dass sie eine Isolierung der Datenbusleitung durchdringen können und hierdurch auf die elektrischen Leiter in der Datenbusleitung treffen und diese elektrisch kontaktieren.

Eine Querschnittsausnehmung stellt hierbei einen Anschlussbereich dar, der an der Steuerungseinheit, insbesondere am Gehäuse der Steuerungseinheit ausgebildet ist und der ein Profil darstellt, welches die Datenbusleitung in Bezug auf Bewegungen senkrecht zu ihrer Längserstreckung festsetzt. Ein solches Profil kann typischerweise durch eine Vertiefung und einen auf die Vertiefung aufsetzbaren und darauf befestigbaren Deckel ausgebildet werden, wodurch zwischen den Wandungen der Vertiefung und der Deckelunterseite ein Querschnittsprofil entsteht, welches die Querschnittsausnehmung bildet. Der Deckel kann zu diesem Zweck beispielsweise geclipt oder verschraubt werden oder in anderer Weise lösbar befestigt werden.

Die Datenbusleitung weist eine Kabelquerschnittsgeometrie auf, die in die Querschnittsausnehmung hineinpasst. Dabei ist die Kabelquerschnittsgeometrie und die Querschnittsausnehmung solcherart ausgebildet, dass die Datenbusleitung nur in einer verpolungssicheren Ausrichtung darin eingelegt werden kann. Durch diese spezifische Ausgestaltung wird einerseits durch die Kontaktstifte eine einfache und zugleich zuverlässige Kontaktierung geschaffen, die keine Konfektionierung der Datenbusleitung mit Steckern erforderlich macht, sondern aufgrund der Kontaktierung mittels Durchdringungstechnik eine einfache Verbindung der Steuerungseinheiten mit der Datenbusleitung erzielt, ohne dass hierfür eine spezifische Ablängung der Datenbusleitung notwendig wird. Zugleich wird durch die spezifische Ausgestaltung der Querschnittsausnehmung und der Kabelquerschnittsgeometrie sichergestellt, dass die Kontaktstifte exakt auf die Leiter in der Datenbusleitung treffen und jeweils verpolungssicher der erste Kontaktstift auf den ersten Leiter und der zweite Kontaktstift auf den zweiten Leiter trifft.

Die Einlegbarkeit der Datenbusleitung in die Querschnittsausnehmung in ausschließlich verpolungssicheren Ausrichtungen der Datenbusleitung wird durch eine spezifische Kabelquerschnittsgeometrie und Querschnittsausnehmung erfindungsgemäß erzielt. Dabei sind grundsätzlich eine Vielzahl von Geometrien des Kabelquerschnitts und der Querschnittsausnehmung denkbar, um diese Funktion der singulären Einlegbarkeit zu erzielen, beispielsweise runde Querschnitte, an denen ein, zwei, drei oder mehrere explizite Längsstege oder Längsnuten ausgebildet sind, rechteckige Querschnitte, welche entsprechend einen oder mehrere Längsstege oder Längsnuten aufweisen, insgesamt mehreckig unregelmäßige Querschnitte und dgl. Grundsätzlich ist zu verstehen, dass die Kabelquerschnittsgeometrie und die Querschnittsausnehmung kongruent zueinander ausgebildet sein können, um eine allseits flächige Anlage zwischen Querschnittsausnehmung und Datenbusleitung zu erzielen. In bestimmten Ausführungsformen kann jedoch die Querschnittsausnehmung auch solcherart ausgestaltet sein, dass sie nur die für eine eindeutige Definition der zulässigen Ausrichtungen notwendigen geometrischen Merkmale der Kabelquerschnittsgeometrie kongruent aufweist und an anderen, für diese Funktion nicht erforderlichen Bereichen von der Kabelquerschnittsgeometrie abweicht, so dass in diesem Fall keine allseits flächige Anlage zwischen Querschnittsausnehmung und Datenbusleitung im Bereich der Querschnittsausnehmung erzielt wird.

Die erfindungsgemäße Fördervorrichtung ist insbesondere dazu ausgebildet, um mit einer zweiadrigen Datenbusleitung ausgeführt zu werden.. Dabei ist zu verstehen, dass durch die Wahl einer solchen Busleitung nicht die Kommunikationsweise gleichfalls dem Standard einer solchen Busleitung entsprechen muss, sondern auch andere, den aktuellen Datengeschwindigkeiten und Datensicherheiten entsprechende Standards, wie beispielsweise die CAN-Bustechnik für die Datenkommunikation eingesetzt werden können.

Grundsätzlich ist zu verstehen, dass die erfindungsgemäß vorgesehenen Steuerungseinheiten zur Signalübertragung an die Fördervorrichtung und von dem Sensor dienen. Gemäß einer grundsätzlich bevorzugten Ausführungsform ist es jedoch weiter vorgesehen, dass die Steuervorrichtungen auch zur Energieversorgung des Förderantriebs und des Sensors dienen. Zu diesem Zweck kann insbesondere eine ebenfalls in Durchdringungstechnik vorgesehene Spannungsversorgungsleitung vorgesehen sein, die parallel zur Datenbusleitung verlegt und in gleicher Weise mit jeder Steuerungseinheit verbunden wird.

Gemäß einer ersten bevorzugten Ausführungsform ist vorgesehen, dass die Kabelquerschnittsgeometrie asymmetrisch ausgebildet ist und dass die Kabelquerschnittsgeometrie und die Querschnittsausnehmung vorzugsweise zueinander kongruent sind. Unter einer asymmetrischen Kabelquerschnittsgeometrie soll hierbei insbesondere eine Geometrie verstanden werden, bei welcher der Kabelquerschnitt weder in Bezug auf irgendeinen Punkt eine Punktsymmetrie aufweist noch in Bezug auf irgendeine Linie eine Spiegelsymmetrie aufweist. Solcherart asymmetrische Querschnittsgeometrien eines Kabels definieren typischerweise eine einzige, oder zwei ausgezeichnete Richtungen, in der ein Kabel mit solchem Querschnitt in eine Ausnehmung eingelegt werden kann, welche insbesondere in Bezug auf die Merkmale, welche die Asymmetrie verursachen, kongruent zu dieser Kabelquerschnittsgeometrie sind.

Vorzugsweise kann vorgesehen sein, dass die Kabelquerschnittsgeometrie und die Geometrie der Querschnittsausnehmung insgesamt kongruent zueinander sind, in spezifischen Ausgestaltungen kann diese Kongruenz jedoch auch nur abschnittsweise vorhanden sein.

Unter einer Kongruenz soll hierbei grundsätzlich eine Geometrie zweier Körper verstanden werden, die zueinander passend sind, d.h. beispielsweise ein Rechteckvorsprung einerseits und eine Rechtecknut andererseits, eine konvexe Fläche einerseits und eine konkave Fläche andererseits, eine Dreiecksnut einerseits und eine im Querschnitt dreieckige Leiste andererseits und dgl. Die Ausgestaltung der Kabelquerschnittsgeometrie in der erfindungsgemäß vorgesehenen Weise, insbesondere einer asymmetrischen Weise, hat zur Folge, dass die diese Geometrie bestimmenden Strukturen sich insgesamt in Längsrichtung des Kabels erstrecken und somit sichergestellt ist, dass die spezifische Kabelquerschnittsgeometrie an jeder Stelle des Kabels bereitgestellt ist. Hierdurch kann die erfindungsgemäße Datenbusleitung an jeder Stelle entlang ihrer gesamten Länge in der erfindungsgemäßen Weise mit einer Steuerungseinheit mit entsprechender Querschnittsausnehmung eindeutig und verpolungssicher verbunden werden.

Eine weitere bevorzugte Ausführungsform zeichnet sich aus durch eine erste Steuerungseinheit welche, zwei Anschlüsse zum Anschluss von jeweils einem Förderantrieb und vorzugsweise weiterhin zwei Anschlüsse zum Anschluss von jeweils einem Sensor, von denen jeder jeweils einem der zwei Förderantriebe zugeordnet ist, aufweist, wobei die erste Steuerungseinheit weiterhin ausgebildet ist, um Datenpakete über die Datenbusleitung zu empfangen und zur Ansteuerung eines der zwei Förderantriebe zu verarbeiten, welche anhand des Adressdatenblocks der Steuerungseinheit zugeordnet sind und welche anhand eines zusätzlichen Datenelements vorzugsweise anhand des Signaldatenblocks dem einen oder dem anderen Förderantrieb bzw. Sensor zugeordnet sind.

Gemäß dieser bevorzugten Ausführungsform können die Förderantriebe und vorzugsweise Sensoren von insgesamt zwei Förderzonen mit einer einzigen Steuerungseinheit verbunden werden und hierdurch der Aufwand, der insgesamt für die Ansteuerung und Verkabelung betrieben werden muss, unter wirtschaftlichen Gesichtspunkten optimiert werden. Dieser erfindungsgemäßen Fortbildung liegt dabei die Erkenntnis zugrunde, dass zwar durch eine Zusammenfassung von einer Vielzahl von Förderantrieben und Sensoren zur Ansteuerung durch eine einzige Steuerungseinheit der Investitionsaufwand und Verkabelungsauf wand maximal reduziert werden kann, sofern hierbei alle Anschlüsse der Steuerungseinheit belegt werden. Allerdings steht dies im Widerspruch zur Variabilität und Multifunktionalität für unterschiedlich konfigurierte Fördervorrichtungen. Dieser Anforderung wird durch die erfindungsgemäße Ausgestaltung in einer idealen Weise entsprochen.

Grundsätzlich wird der Installationsaufwand in Fördervorrichtungen mit Buskommunikationstechnik auch durch die Anzahl der Busadressen, die zu vergeben und verwalten sind, bestimmt und die Komplexität der Erstinstallation und etwaiger Neuinstallationen nach Austausch defekter Teile oder nach Ergänzung steigt mit der Anzahl der zu vergebenden Busadressen. Erfindungsgemäß ist daher vorgesehen, dass die eine erste Steuerungseinheit genau eine Busadresse zugewiesen bekommt und folglich innerhalb des Systems als eine einzige adressmäßig anzusteuernde Einheit betrachtet wird. Um jedoch die beiden an die Steuerungseinheit angeschlossenen Förderantriebe individuell ansteuern zu können, wird dies insbesondere durch eine entsprechende Konfiguration des Signaldatenblocks erzielt. Die Steuerungseinheit ist zu diesem Zweck dazu ausgebildet, um Datenpakete, die ihre Busadresse tragen, hinsichtlich eines bestimmten Datenabschnitts im Signaldatenblock auszuwerten und in Abhängigkeit von dieser Dateneinheit im Signaldatenblock entweder den einen oder den anderen Förderantrieb mit den im Signaldatenblock entsprechend enthaltenen weiteren Befehlen anzusteuern. In gleicher Weise werden auch die Signale der Sensoren mit einem einheitlichen Adressdatenblock der Steuerungseinheit und einem individuell den Sensor kennzeichnenden Datenblock im Signaldatenblock versehen, um sensorindividuelle Datenkommunikation zu ermöglichen.

Gemäß einer weiteren bevorzugten Ausführungsform ist eine zweite Steuerungseinheit vorgesehen, umfassend eine erste Schnittstelle zum Anschluss eines Förderantriebs, eine zweite Schnittstelle zum Anschluss eines Sensors, und eine dritte Schnittstelle, welche zumindest einen Eingang und zumindest einen Ausgang aufweist und welche konfigurierbar ist für den Anschluss eines Aktuators oder eines Sensors oder einer Kombination eines Aktuators und eines Sensors.

Diese Ausgestaltung eignet sich insbesondere dazu, um im Bereich von Verzweigungen, Einschleusungen, Ausschleusungen oder dgl. zum Einsatz zu kommen. Weiterhin wird mit dieser Steuerungseinheit erfindungsgemäß ein spezifisches Problem von komplexen Fördervorrichtungen bewältigt, welches darin besteht, dass neben den systemtechnisch vorgesehenen Förderantrieben und Sensoren häufig individuelle Antriebe oder Sensoren zum Einsatz kommen, die sich beispielsweise hinsichtlich ihrer Ansteuerungsweise, hinsichtlich ihrer Versorgungsspannung oder dgl. von den systemtechnisch vorgesehenen Förderantrieben und Sensoren unterscheiden. Grundsätzlich ist zu verstehen, dass die Ausschlüsse für Förderantriebe und Sensoren einer genormten Kontaktanordnung und -belegung folgen und beispielsweise eine Versorgungsspannung vorbestimmter Höhe aufweisen. Dies ermöglicht eine rasche und einfache Installation. Um eine Kommunikationsstruktur zu schaffen, die ohne erheblichen Mehraufwand in der Lage ist, auch individuelle Antriebe und Sensoren in die gesamte Steuerung einzubeziehen, wird diese zweite Steuerungseinheit mit einer dritten Schnittstelle bereitgestellt, welche für einen solchen Aktuator und/oder Sensor konfigurierbar ist. Unter einer Konfigurierbarkeit ist hierbei insbesondere eine individualisierbare Kontaktbelegung und/oder Versorgungsspannung zu verstehen. Die dritte Schnittstelle kann dabei insbesondere als Stiftleiste vorgesehen sein. Die dritte Schnittstelle kann beispielsweise als Repeater (also als Signalgenerator, der ein Signal empfängt und in aufbereiteter oder beeinflusster Weise weitergibt) oder Splitter (also als Signalweiche, die ein Eingangssignal alternativ oder kumulativ auf mehrere Ausgänge verteilt) ausgeführt sein, um hierdurch eine Vielzahl von Ansteuerungsmöglichkeiten bereitzustellen.

Noch weiter ist es bevorzugt, dass eine, insbesondere die zweite Steuerungseinheit eine erste Anschlussausnehmung aufweist zum Anschluss eines ersten Datenbusleitungsstrangs und eine zweite Anschlussausnehmung zum Anschluss eines zweiten Datenbusleitungsstrangs aufweist und dass in der ersten und zweiten Anschlussausnehmung jeweils ein erster und ein zweiter elektrischer Kontaktstift zum Kontakt mit jeweils einem ersten und zweiten Leiter einer in die Anschlussausnehmung eingelegten Datenbusleitung angeordnet ist und dass innerhalb der Steuerungseinheit die beiden ersten elektrischen Kontaktstifte elektrisch miteinander verbunden sind und die beiden zweiten elektrischen Kontaktstifte elektrisch miteinander verbunden sind. Dabei ist zu verstehen, dass beide Anschlussausnehmungen in der erfindungsgemäßen Weise verpolungssicher ausgeführt sind. Mit dieser Ausgestaltung wird durch die Steuerungseinheit eine Kabelbrückenfunktion bereitgestellt, was es ermöglicht, dass zwei Datenbusleitungen durch diese Steuerungseinheit miteinander in einer verpolungssicheren Weise verbunden werden und folglich eine entsprechende Verlängerung der Datenbusleitung mittels der Steuerungseinheit möglich ist. Diese Kabelbrückenfunktion wird erfindungsgemäß ebenfalls durch die Durchdringungstechnik mittels Kontaktstiften erzielt und die Ausgestaltung dieser Steuerungseinheit in der Ausgestaltung mit einer ersten und zweiten Anschlussausnehmung reduziert die Anzahl der unterschiedlichen Bauelemente der Fördervorrichtung weiter und erzielt zugleich eine hohe Variabilität und Funktionalität des gesamten Systems.

Noch weiter ist bevorzugt vorgesehen, dass die zweite Anschlussausnehmung oder eine weitere Anschlussausnehmung an der Steuerungseinheit ausgebildet ist, um eine Datenbusleitung in einer ersten Ausrichtung und in einer zweiten, von der ersten verschiedenen Ausrichtung, insbesondere einer um 180° gedrehten Ausrichtung in die Anschlussausnehmung und in beiden Ausrichtungen der erste Leiter mit dem ersten Kontaktstift und der zweite Leiter mit dem zweiten Kontaktstift in elektrischem Kontakt ist.

Mit dieser Ausgestaltung wird eine spezifische Problematik von Fördervorrichtungen erfindungsgemäß gelöst. Diese spezifische Problematik besteht darin, dass die gesamte Steuerungs- und Kommunikationstechnik, welche in einer solchen Fördervorrichtung benötigt wird, häufig unmittelbar an oder in einer Strebe eines Gestells verlegt wird, welches Bestandteil der Fördervorrichtung ist und in dem beispielsweise die Förderantriebe befestigt sind. Je nach Anordnung und Ausrichtung kann es dabei jedoch notwendig sein, die Steuerungseinheiten und die Datenbusleitung auf der einen oder auf der anderen Seite des Fördergestells anzuordnen und verlaufen zu lassen. Wird es nun im Verlauf einer Förderstrecke notwendig, von der einen auf die andere Seite des Gestells zu wechseln, so führt dies bei Steuerungseinheiten mit einer ausgezeichneten Einlegerichtung der Datenbusleitung In eine Querschnittsausnehmung der Steuerungseinheit zu einem erheblichen Verkabelungsmehraufwand. Die Ursache hierfür liegt darin, dass die in einer geraden Weise auf der einen Seite verlegte Datenbusleitung nach einem Seitenwechsel nicht mehr für eine geradlinige Verlaufsrichtung entlang der dort angeordneten Steuerungseinheiten ausgerichtet ist, sondern stattdessen durch jede dieser Steuerungseinheiten in einer Schleife rückwärts verlegt werden muss, um dann wiederum in einer Schleife zur nächsten Steuerungseinheit verlegt zu werden, wodurch die Datenbusleitung bei jeder Steuerungseinheit in einer 360°-Schleife verlegt werden muss. Diese Problematik wird erfindungsgemäß gelöst, indem die Datenbusleitung bei einem solchen Seitenwechsel durchtrennt wird und in einer rückwärts gerichteten Weise auf der einen Seite in die entsprechende Querschnittsausnehmung der Steuerungseinheit eingelegt und entsprechend verpolungssicher kontaktiert wird. Der so rückwärts gerichtete Datenbusleitungsanteil kann in einer 180° -Schleife dann auf die andere Seite des Fördergestells geführt werden, um dort wiederum geradlinig entlang der dort angeordneten Steuerungseinheiten verpolungssicher und in der eindeutig definieren Richtung eingelegt und kontaktiert zu werden. Dabei ist es besonders bevorzugt, wenn diese Option, die Datenbusleitung um 180° gedreht einzulegen, an einer Steuerungseinheit bereitgestellt wird, die alternativ oder zusätzlich auch als Kabelbrücke zur Verlängerung der Datenbusleitung zu ihrer Fortführung auf einer Seite des Fördergestells ausgebildet ist, vorzugsweise indem eine dort ausgebildete Ausnehmung das Einlegen der Busleitung in entsprechend zwei Ausrichtungen und verpolungssicher ermöglicht.

Die erfindungsgemäße Fördervorrichtung wird weiter fortgebildet durch eine erste Zentralsteuerungseinheit, umfassend eine Anschlussausnehmung mit einem ersten und einem zweiten elektrischen Kontaktstift zum erfingdungsgemäß verpolungssicheren Kontakt mit jeweils einem ersten und zweiten Leiter einer in die Anschlussausnehmung eingelegten Datenbusleitung, eine zweite Busschnittstelle, insbesondere eine Feldbusschnittstelle zum Anschluss einer SPS-Steuerung, und eine Steuerungslogik, welche ausgebildet ist, um in einem ersten Betriebsmodus über die zweite Busschnittstelle Adressierungs- und Parametrierungsdaten zu empfangen und an den ersten und zweiten elektrischen Kontaktstift zu kommunizieren und in einem zweiten Betriebsmodus die über die zweite Busschnittstelle ausgetauschten Signale an den ersten und zweiten elektrischen Kontaktstift zu kommunizieren.

Diese Fortbildung ermöglicht es, mittels der Zentralsteuerungseinheit eine Installation der gesamten Steuerungseinheiten der Fördervorrichtung durchzuführen, insbesondere eine Adresszuweisung für jede Steuerungseinheit vorzunehmen und hiernach den an diese Steuerungseinheit angeschlossenen Förderantrieben und Sensoren Parameter zuzuweisen, wie beispielsweise Fördergeschwindigkeit, Anlauf- und Auslauframpen, einen Fördermodus wie Einzelplatzabzug oder Blockabzug und dgl. Die Zentralsteuerungseinheit ist dabei weiterhin so ausgebildet, dass die Steuerung insgesamt über eine externe SPS erfolgt, die ihre Steuerungsdaten über eine zweite Busschnittstelle an der Zentralsteuerungseinheit einspeist. Die SPS kann hierbei sämtliche Parameter, welche für den Betrieb aller in der Fördervorrichtung vorhandenen Förderantriebe erforderlich sind, an die Steuerungseinheiten kommunizieren und hierdurch einen vorprogrammierten Ablauf umsetzen. Mit der erfindungsgemäßen Vorrichtung wird folglich die Installation, d.h. Adress- und Paramaterzuweisung und die spätere Ablaufsteuerung mittels einer SPS über eine einzige spezifische Busschnittstelle an einer Zentralsteuerungseinheit ermöglicht.

Dabei ist es gemäß einer weiteren bevorzugten Ausführungsform vorgesehen, dass die Steuerungslogik weiterhin ausgebildet ist, um in einem dritten Betriebsmodus, in dem über die zweite Busschnittstelle keine Daten kommuniziert werden, einen von einer externen Steuerung unabhängigen Betrieb anhand dieser Adressierungs- und Parametrierungsdaten auszuführen. Diese Ausgestaltung ermöglicht es, dass die Fördervorrichtung nach erfolgter Installation, d.h. Adresszuweisung und Parameterzuweisung ohne Steuerungsdaten einer übergeordneten Einheit, wie beispielsweise einer SPS, die Förderaufgaben ausführt und hierbei einer internen Logik, die insbesondere alleine durch Kommunikation der Steuerungseinheiten untereinander erzeugt wird, folgt. Prinzipiell ist dies so zu verstehen, dass die Zentralsteuerungseinheit nach erfolgter Adressierung und Parametrierung von der Datenbusleitung entfernt werden kann und hiernach ein störungsfreier und entsprechend vordefinierter Betrieb der Fördervorrichtung ausgeführt wird. Die Zentralsteuerungseinheit kann demnach wahlweise die Ansteuerung mittels einer externen Steuerungsquelle, wie einer SPS, ermöglichen oder stattdessen den autarken Betrieb ohne eine solche externe Steuerung. Alternativ kann vorgesehen sein, eine erste Zentralsteuerungseinheit bereitzustellen, die ausgebildet ist, um die Fördervorrichtung zu adressieren, parametrieren und mittels einer externen SPS zu steuern und eine zweite, hiervon unterschiedliche Zentralsteuerungseinheit (CentralControl) vorzusehen, die für eine Adressierung und Parametrierung ausgebildet ist, die Steuerung über eine externe Steuerung jedoch nicht ermöglicht.

Ein weiterer Aspekt der Erfindung ist ein Verfahren zum Fördern von Gegenständen, mit den Schritten: Bereitstellen einer Förderstrecke mit einer Mehrzahl von Förderzonen, die jeweils einen Fördersensor und einen Förderantrieb umfassen, Bereitstellen einer Mehrzahl von Steuerungseinheiten, welche jeweils zumindest eine Schnittstelle für einen Sensor und zumindest eine Schnittstelle für einen Förderantrieb aufweisen, Verbinden des Förderantriebs und Sensors von jeder Förderzone mit einer der Steuerungseinheiten, wobei erfindungsgemäß vorgesehen ist, dass die Steuerungseinheiten untereinander mittels einer Busleitung verbunden sind und Daten über zwei Leiter der Busleitung untereinander austauschen, die Busleitung einen Querschnitt ausweist, der zumindest teilweise kongruent zu einer Querschnittsausnehmung an den Steuerungseinheiten ist und in diese Querschnittsausnehmung in genau nur solchen Ausrichtungen einlegbar ist, dass jeder Leiter der Busleitung mittels jeweils einem im Bereich der Querschnittsausnehmung angeordneten Kontaktstift mit der Steuerungseinheit elektrisch verbunden, wird, indem der jeweilige Kontaktstift eine elektrisch isolierende Umhüllung der Busleitung durchdringt und verpolungssicher in elektrischen Kontakt mit dem jeweiligen Leiter tritt. Mit diesem erfindungsgemäßen Förderverfahren wird eine besonders zuverlässige und einfache Installation, Umrüstung und Aufrüstung von Fördervorrichtungen sowie ein einfacher Betrieb ermöglicht, indem eine verpolungssichere, zugleich kontaktsichere und konstruktiv zuverlässige, kostengünstige Kommunikationsstruktur bereitgestellt wird.

Das Verfahren kann fortgebildet werden, indem zwei Förderantriebe und zwei Sensoren an eine Steuerungseinheit signaltechnisch angeschlossen werden, und von jedem der zwei Förderantriebe und Sensoren Daten über die Busleitung empfangen und gesendet werden, welche als Datenpaket mit einem der Steuerungseinheit, an welche die Förderantriebe und Sensoren angeschlossen sind, zugeordneten Adressdatenblock und einem Signaldatenblock, welcher eine dem jeweiligen Förderantrieb bzw. Sensor zugeordnete Signaldateneinheit kommuniziert werden. Mit dieser Fortbildung wird ein rationeller Betrieb von Fördervorrichtungen mit einer Vielzahl von Förderzonen ermöglicht, indem ein Zusammenschluss von zwei Förderantrieben und Sensoren zum Anschluss an eine Steuerungseinheit vorgenommen wird.

Noch weiter ist es erfindungsgemäß vorgesehen, dass in einem der Förderung der Gegenstände vorhergehenden Parametrierschritt jeder Förderzone Förderparameter und vorzugsweise ein Fördermodus zugewiesen werden, indem entsprechende Förderparameter und ein gegebenenfalls Fördermodus an die der Förderzone zugeordnete Steuerungseinheit in dem Parametrierschritt zugewiesen werden, und jede Förderzone die Gegenstände nachfolgend mit den ihr zugewiesenen Förderparametern und dem ihr zugewiesenen Fördermodus fördert.

Gemäß einer weiteren bevorzugten Ausführungsform des erfindungsgemäßen Verfahrens, bei dem die Förderantriebe in einem sich in Förderrichtung erstreckenden Fördergestell befestigt sind und eine erste Busleitung in einem ersten Bereich auf einer ersten Seite des Fördergestells verlegt wird und eine zweite Busleitung in einem in Förderrichtung an den ersten Bereich anschließenden zweiten Bereich auf einer der ersten Seite gegenüberliegenden Seite angeordnet wird, ist vorgesehen, dass im Übergangsbereich zwischen dem ersten und dem zweiten Bereich eine Steuerungseinheit angeordnet wird, welche die erste Busleitung in einer ersten Querschnittsausnehmung aufnimmt, die zweite Busleitung in einer zweiten Querschnittsausnehmung aufnimmt, mittels jeweils in der ersten und zweiten Querschnittsausnehmung angeordnete erste und zweite Kontaktstifte die Leiter der ersten und zweiten Busleitung elektrisch kontaktiert, wobei die beiden ersten Kontaktstifte der ersten und zweiten Querschnittsausnehmung elektrisch miteinander innerhalb der Steuerungseinheit verbunden sind, und die beiden zweiten Kontaktstifte der ersten und zweiten Querschnittsausnehmung elektrisch miteinander innerhalb der Steuerungseinheit verbunden sind, wobei die erste Busleitung auf der ersten Seite des Fördergestells in Förderrichtung verläuft und die zweite Busleitung auf der ersten Seite entgegen der Förderrichtung verläuft und in einer 180°-Schleife auf die zweite Seite geführt wird und dort in Förderrichtung verläuft.

Mit dieser Ausgestaltung wird ein Seitenwechsel der Datenbusleitung von einer Seite auf die andere Seite eines Fördergestells in solcher Weise ausgeführt, dass die Datenbusleitung auf beiden Seiten in einem geradlinigen Verlauf entlang den jeweils dort angeordneten Steuerungseinheiten verlegt werden kann. Noch weiter ist es bevorzugt vorgesehen, das erfindungsgemäße Verfahren, bei dem die Förderantriebe in einem sich in Förderrichtung erstreckenden Fördergestell befestigt sind und eine dritte Busleitung in einem dritten Bereich auf einer ersten Seite des Fördergestells verlegt wird und eine vierte Busleitung in einem in Förderrichtung an den dritten Bereich anschließenden vierten Bereich auf der ersten Seite angeordnet wird, so fortzubilden, dass im Übergangsbereich zwischen dem dritten und dem vierten Bereich eine Steuerungseinheit angeordnet wird, welche die dritte Busleitung in einer ersten Querschnittsausnehmung aufnimmt, die vierte Busleitung in einer zweiten Querschnittsausnehmung aufnimmt, mittels jeweils in der ersten und zweiten Querschnittsausnehmung angeordnete erste und zweite Kontaktstifte die Leiter der dritten und vierten. Busleitung elektrisch kontaktiert, wobei die beiden ersten Kontaktstifte der ersten und zweiten Querschnittsausnehmung elektrisch miteinander innerhalb der Steuerungseinheit verbunden sind, und die beiden zweiten Kontaktstifte der ersten und zweiten Querschnittsausnehmung elektrisch miteinander innerhalb der Steuerungseinheit verbunden sind.

Mit dieser Ausgestaltung wird eine einfache und zugleich sichere Möglichkeit geschaffen, die Datenbusleitung entlang der Förderstrecke zu verlängern, indem eine Kabelbrückenfunktion mit verpolungssicherer Kontaktierung bereitgestellt wird.

Dabei ist es bei den beiden vorgenannten bevorzugten Ausführungsformen insbesondere vorgesehen, dass eine Verlängerung der Datenbusleitung von einem Seitenwechsel gefolgt wird oder umgekehrt und sowohl die Verlängerungs- als auch die Seitenwechselfunktion durch jeweils eine baugleiche Steuerungseinheit bereitgestellt wird.

Gemäß einer weiteren bevorzugten Ausführungsform ist vorgesehen, dass die Verlängerungs- und Seitenwechselfunktion in einer einzigen Steuerungseinheit ausgeführt wird und hierdurch die Möglichkeit geschaffen wird, eine Verzweigung mit dem erfindungsgemäßen Installationsverfahren auszuführen.

Schließlich ist ein weiterer Aspekt der Erfindung die Verwendung einer Busleitung zur Datenkommunikation zwischen zwei Förderzonen in einer Fördervorrichtung, wobei erfindungsgemäß im Bereich einer Querschnittsausnehmung einer eine erste Förderzone steuernden, ersten Steuerungseinheit ein erster und ein zweiter elektrischer Kontaktstift angeordnet ist, zwischen einem entsprechend ersten und zweiten Leiter einer in die Querschnittsausnehmung eingelegten Datenbusleitung und der ersten Steuerungseinheit ein elektrischer Kontakt hergestellt wird, indem eine isolierende Hülle der Datenbusleitung von den Kontaktstiften im Bereich der Querschnittsausnehmung soweit durchdrungen wird, dass der erste elektrische Kontaktstift mit dem ersten Leiter und der zweite elektrische Kontaktstift mit dem zweiten Leiter der Datenbusleitung in elektrischen Kontakt tritt, dass im Bereich einer Querschnittsausnehmung einer eine zweite Förderzone steuernden, zweiten Steuerungseinheit ein erster und ein zweiter elektrischer Kontaktstift angeordnet ist, zwischen dem entsprechend ersten und zweiten Leiter der in die Querschnittsausnehmung eingelegten Datenbusleitung und der zweiten Steuerungseinheit ein elektrischer Kontakt hergestellt wird, indem die isolierende Hülle der Datenbusleitung von den Kontaktstiften der zweiten Steuerungseinheit im Bereich der Querschnittsausnehmung soweit durchdrungen wird, dass der erste elektrische Kontaktstift mit dem ersten Leiter und der zweite elektrische Kontaktstift mit dem zweiten Leiter der Datenbusleitung in elektrischen Kontakt tritt, und dass die Datenbusleitung zumindest zweiadrig ist und eine Kabelquerschnittsgeometrie aufweist, welche in die Querschnittsausnehmung der ersten und der zweiten Steuerungseinheit solcherart eingelegt wird, dass die Kabelquerschnittsgeometrie und die Querschnittsausnehmung genau eine Ausrichtung der Datenbusleitung in der Querschnittsausnehmung definieren und hierdurch eine verpolungssichere Verbindung zwischen der ersten und der zweiten Steuerungseinheit hergestellt wird.

Mit dieser spezifischen Verwendungsweise wird ein verpolungssicher mittels Durchdringungstechnik zu kontaktierendes Datenbuskabel, insbesondere ein in der Querschnittsgeometrie asymmetrisches Datenbuskabel dazu eingesetzt, um in einer Fördervorrichtung eine einfache und zugleich zuverlässige Datenkommunikation bereitzustellen.

Bevorzugte Ausführungsformen der Erfindung werden anhand der anhängenden Figuren beschrieben. Es zeigen:
Figur 1 eine perspektivische Ansicht einer ersten Ausführungsform einer erfindungsgemäßen Steuerungseinheit,
Figur 2 eine Seitenansicht der Steuerungseinheit gemäß Figur 1,
Figur 3 eine perspektivische Ansicht der Steuerungseinheit gemäß Figur 1 mit angeschlossener Energieversorgungsleitung und Datenbusleitung,
Figur 4 eine perspektivische Ansicht einer zweiten Ausführungsform einer erfindungsgemäßen Steuerungseinheit,
Figur 5 eine Seitenansicht der zweiten Ausführungsform gemäß Figur 4,
Figur 6 eine perspektivische Ansicht der Steuerungseinheit gemäß Figur 4 mit angeschlossener Energieversorgungsleitung und Datenbusleitungen,
Figur 7 eine perspektivische Ansicht einer ersten Ausführungsform einer Zentralsteuerungseinheit gemäß der Erfindung,
Figur 8 eine zweite Ausführungsform einer Zentralsteuerungseinheit gemäß der Erfindung.

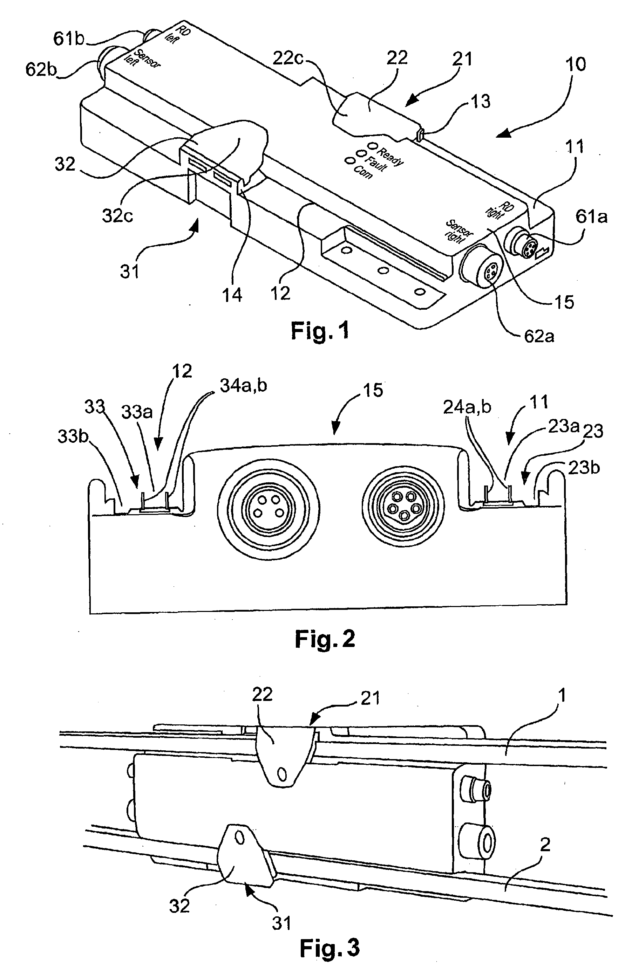

In den Figuren 1 - 3 ist eine Steuerungseinheit 10 abgebildet, welche ein Gehäuse aufweist, das sich in einer Längsrichtung erstreckt und einen mittigen, sich über die gesamte Länge in Längsrichtung erstreckenden Hauptkörper 15 aufweist. Das Gehäuse weist beidseits vom Hauptkörper 10 an beiden Längsseiten eine Gehäuserandleiste 11, 12 auf, deren Höhe geringer ist als diejenige des Hauptkörpers. Hierdurch ergibt sich für das Gehäuse ein in der Seitenansicht zu beiden Außenkanten hin gestufter Aufbau mit den Gehäuseseitenleisten 11, 12 als seitliche Stufen mit gleicher Höhe und einem Hauptkörper 10, der eine gegenüber den Gehäuserandleisten 11, 12 größere Höhe aufweist.

Im Bereich beider Seitenleisten ist etwa mittig und gegenüberliegend versetzt zueinander jeweils eine Anschlussvorrichtung 21, 31 für eine Leitung ausgebildet.

Diese Anschlussvorrichtungen 21, 31 werden durch einen jeweiligen Anschlussdeckel 22, 32 abgedeckt. Die Anschlussdeckel 22, 32 sind an der Außenseite formschlüssig mittels zweier Vorsprünge in zwei hierzu korrespondierende Öffnungen eingesetzt, die in einem am Außenrand des Gehäuses 10, 11, 12 sich erstreckenden Seitensteg 13, 14 ausgebildet sind. Nach innen hin in Richtung der Mittellängsachse der Steuerungseinheit wird jeder Anschlussdeckel 22, 32 durch jeweils eine Schraube 22c, 32c lösbar mit dem Gehäuse in einer definierten Position verbunden.

Zwischen jedem Anschlussdeckel 22, 32 und der Oberseite der Gehäuseseitenleiste 11 bzw. 12 ist eine Anschlussausnehmung 23, 33 ausgebildet. Diese Anschlussausnehmung ist asymmetrisch ausgebildet, indem sie aus einem in Fig. 2 erkennbaren rechteckigen ersten Querschnittsanteil 23a, 33a und einem daran links unten bzw. rechts unten anschließenden rechteckigen zweiten Querschnittsanteil 23b, 33b zusammengesetzt ist. Die Anschlussausnehmung 23, 33 definiert hierdurch eine vorbestimmte Ausrichtungslage eines hierzu kongruent entsprechend ausgebildeten Leitungen 1, 2.

Die Anschlussvorrichtung 21 dient zum Anschluss einer als zweiadrige Busleitung ausgeführten Energieversorgungsleitung 1 an die Steuerungseinheit, wohingegen die Anschlussvorrichtung 31 zum Anschluss einer zweiadrigenDatenbusleitung 2 an die Steuerungseinheit dient. Die zweiadrige Busleitung und die zweiadrige Datenbusleitung sind im Querschnitt übereinstimmend ausgeführt und beinhalten zwei elektrische Leiter, die geradlinig und unverdrillt nebeneinander ausgerichtet in einer Isolatorumhülluhg verlaufen. Die beiden elektrischen Leiter weisen keine individuelle Isolierumhüllung auf und sind alleinig durch die Isolatorumhüllung voneinander elektrisch isoliert.

Zum Zwecke des Anschluss wird die jeweilige Leitung auf der Oberseite der Gehäuseseitenleiste 11 bzw. 12 bei abgenommenem Anschlussdeckel 22, 32 aufgelegt. Hierbei muss die Leitung im Bereich des Anschlussdeckels auf metallisch leitende Dorne 24a, b bzw. 34a, b aufgedrückt werden, die hierbei die Isolierung der Leitung durchdringen und zwei in der Leitung befindliche Leiter elektrisch kontaktieren.

Dieser Durchdringungsvorgang von den elektrisch leitenden Dornen 24a, b bzw. 34a, b kann durch das Montieren des Anschlussdeckels nach Positionieren der Leitung bewirkt werden. Figur 3 zeigt die Steuerungseinheit mit eingelegten und angeschlossenen Leitungen 1, 2 und hiernach montierten Anschlussdeckeln 22, 32.

Die Steuerungseinheit 10 gemäß Figuren 1-3 weist weiterhin an beiden Seiten jeweils zwei genormte Anschlussbuchsen 61a,b, 62a,b zum Anschluss von jeweils einem Antriebsmotor und einem Sensor auf. An die Anschlussbuchsen 61a,b kann der Antriebsmotor einer Fördervorrichtung angeschlossen werden, und die Anschlussbuchse weist zu diesem Zweck eine Anzahl von fünf Kontakten auf, um einem bürstenlosen Gleichstrommotor solcher Art anzusteuern, dass dessen Drehzahl stufenlos gesteuert werden kann. Der jeweilige Sensoranschluss 62a,b dient zum Anschluss eines Sensors zur Erfassung eines Produkts im Bereich, in dem die Förderwirkung des an die benachbarte Buchse 61a,b angeschlossenen Antriebsmotors wirkt. Auf diese Weise kann durch die Steuerungseinheit gemäß den Figuren 1 - 3 eine Ansteuerung von zwei Antriebsmotoren mit zugehörigen Sensoren für zwei Fördersegmente in unabhängiger Weise voneinander erfolgen. Die hierfür erforderlichen Steuerungssignale können über die Datenbusleitung 2 an diese Antriebsmotoren der Fördervorrichtungen gesendet werden und sind hierzu entsprechend nach dem CAN-BusÜbertragungsprinzip codiert und können von einer in der Steuerungseinheit angeordneten Datenverarbeitungseinrichtung ausgelesen und solcherart decodiert werden, dass daraus ein über den Ausgang 61a, b versendbares und vom Antriebsmotor verwertbares analoges Signal erzeugt wird.

Die Steuerungseinheit wird durch die Energieversorgungsleitung 1, welche über den Anschluss 21 angeschlossen ist, mit Energie versorgt, und leitet diese Energie zugleich an die angeschlossenen Antriebsmotoren und Sensoren für deren Betriebsspannung weiter. Die Datenbusleitung 2 und die Energieversorgungsleitung 1 sind hierbei mit einem asymmetrischen Leitungsquerschnitt versehen, der exakt kongruent zu den Ausnehmungen im Bereich der Anschlussvorrichtungen ausgebildet ist. In diesem Leitungsquerschnitt sind genau zwei elektrische Leiter an definierter Stelle angeordnet und können durch einen Durchdringungskontakt von außen elektrisch kontaktiert werden.

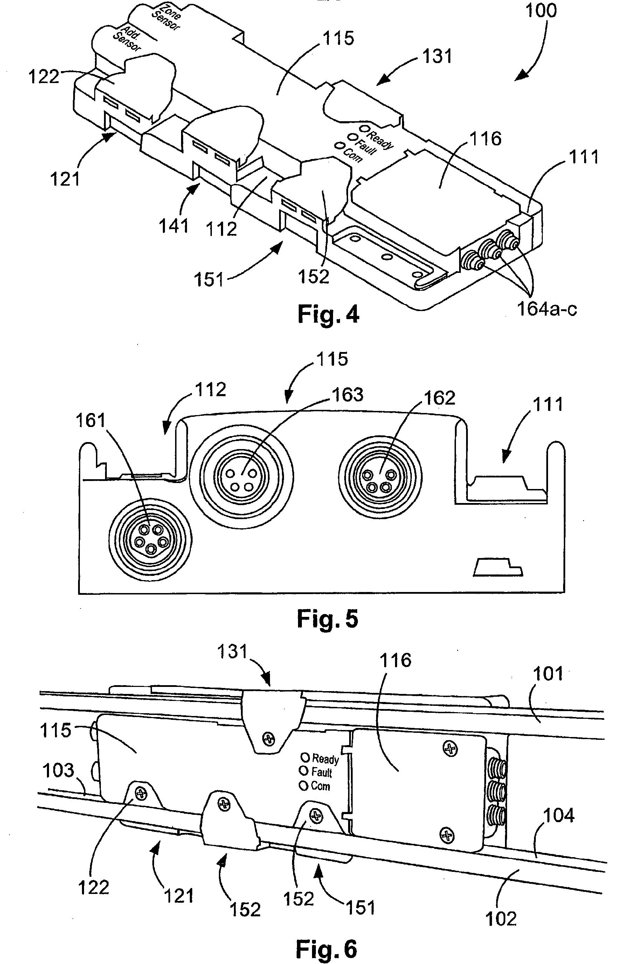

In den Figuren 4 -6 ist eine zweite Ausführungsform einer Steuerungseinheit gezeigt, die wiederum über ein Gehäuse mit einem mittigen, in Längsrichtung sich über die gesamte Länge erstreckenden Zentralkorpus 115 und sich an den Seiten erstreckende Gehäuseseitenleisten 111, 112 mit geringerer Höhe als der Zentralkorpus zusammensetzt.

Eine Energieversorgungsleitung 101 ist an eine Energieanschlussvorrichtung 131 und eine Datenbusleitung 102 an eine in gleicher Weise angeschlossen wie zuvor zur ersten Ausführungsform beschrieben.

Die in den Figuren 4 - 6 gezeigten Ausführungsform unterscheidet sich von der in den Figuren 1 - 3 gezeigten Ausführungsform einerseits darin, dass insgesamt drei Anschlussvorrichtungen 121, 141, 151 für Datenbusleitungen 102-104 auf der hierzu gegenüberliegenden Seite des Gehäuses angeordnet sind. Diese drei Anschlussvorrichtungen 121, 141, 151 liegen alle im Bereich der Gehäuseseitenleiste 112, sind jedoch so angeordnet, dass sie die Konnektierung von insgesamt drei Datenbusleitungen 102-104 erlauben. Zum Einen kann in die zur linken Seite angeordnete Anschlussvorrichtung 121 eine Datenbusleitung 103 eingelegt werden, welche als Endstück eingelegt und zur linken Seite von der Gehäuseseitenleiste weggeführt wird. Zum anderen kann an der rechten Anschlussvorrichtung 151 eine Datenbusleitung 104 angeschlossen werden, die ebenfalls als Endstück eingelegt und zur rechten Seite auf der Gehäuseseitenleiste weggeführt wird. Des weiteren kann an der mittig zwischen der linken und rechten Anschlussvorrichtung liegenden Anschlussvorrichtung 141 eine Datenbusleitung 102 angeschlossen werden, die durchlaufend über die gesamte Gehäuseseitenleiste 112 und über die Anschlussdeckel 122 und 152 verläuft und hierdurch oberhalb von einer an der linken Anschlussvorrichtung 121 oder an der rechten Anschlussvorrichtung 151 angeschlossenen Datenbusleitung 102 und 103 liegt.

Die in den Figuren 4 - 6 gezeigte Steuerungseinheit kann daher einerseits dazu dienen, das Bussignal von einer durchlaufenden Busleitung 103 auf einen oder zwei zusätzliche Busleitungen 102, 104 zu verteilen. Diese Funktion wird erreicht, indem die elektrischen Kontaktierungsstifte der Anschlussvorrichtungen 121, 141, 151 miteinander solcher Art in Kontakt stehen, dass übereinstimmende Leitungsstränge innerhalb der angeschlossenen Datenbusleitung innerhalb der Steuerungseinheit miteinander in elektrischen Kontakt gesetzt werden, wenn diese an die Anschlussvorrichtungen angeschlossen sind.

Für eine sichere Kontaktierung ist hierbei maßgeblich, dass jede der Anschlussvorrichtungen 121, 141, 151 ein asymmetrisches Querschnittsprofil aufweist, in welches die Datenbusleitung mit einem hierzu entsprechend kongruenten asymmetrischen Leitungsquerschnitt in ausschließlich einer definierten Position eingelinkt werden kann, um den Durchdringungskontakt herzustellen.

Die in den Figuren 4 -6 gezeigte Steuerungseinheit kann neben der Verzweigungsfunktion weiterhin auch dazu genutzt werden, um eine Datenbusleitung zu verlängern oder um eine Datenbusleitung solcher Art umzulenken, dass sie von einer Seite einer Förderstrecke auf die andere Seite der Förderstrecke verlegt werden kann, ohne dass hierdurch eine Verschleifung zur Beibehaltung der Verpolungsanordnung der beiden Leiter in der Datenbusleitung erforderlich wäre.

Die in den Figuren 4 - 6 gezeigte Steuerungseinheit unterscheidet sich des Weiteren von der in den Figuren 1 - 3 gezeigten Steuerungseinheit darin, dass sie an einer Seite zwei Anschlussbuchsen 162, 163 für Sensoren und eine Anschlussbuchse 161 für eine Antriebsmotor einer Fördervorrichtung aufweist. An der hierzu gegenüberliegenden Seite der Steuerungseinheit gemäß der zweiten Ausführungsform ist ein mit zwei Schrauben und einem Scharnier befestigter Deckel 116 angeordnet. Unterhalb dieses Deckels ist eine steuerungstechnisch über die angeschlossenen Datenbusleitungen 102-104 ansteuerbare Stiftleiste mit mehreren elektrischen Kontaktstiften angeordnet. Diese elektrischen Kontaktstifte dienen zum Anschluss an beliebige Sensoren, Signalgeber oder Aktuatoren, deren Leitungen zu diesem Zweck durch drei an dieser Gehäuseseite angeordnete Blindstopfen 164a-c hindurchgeführt werden können. Die Steuerungseinheit gemäß der zweiten Ausführungsform eröffnet auf diese Weise den Anschluss von einerseits normierten Steckern für Sensoren und einen Antriebsmotor auf der einen Seite und andererseits den Anschluss von Sensoren oder Aktuatoren mit beliebiger Funktionalität und Anschlussschema im Bereich des Gehäusedeckels 115 auf der anderen Seite. Sowohl die dabei angeschlossenen genormten Sensoren und des genormten Motors als auch die über die Stiftleiste angeschlossenen Sensoren oder Aktuatoren können hierbei aus Signalen aus der Datenbusleitung angesteuert werden und entsprechend Signale über die Steuerungseinheit in diese Datenbusleitung einspeisen.

Die in den Figuren 1 -6 gezeigten Steuerungseinheiten dienen dazu, um in einer Rollenförderanlage eine Mehrzahl von Antriebsrollen und entsprechende Sensoren anzusteuern. Zu diesem Zweck werden entsprechend mehrere Steuerungseinheiten über eine durchgängige Datenbusleitung mit ggf. erforderlichen Verzweigungen und einer Energieversorgungsleitung im Bereich einer solchen Rollenförderanlage angeschlossen und montiert.

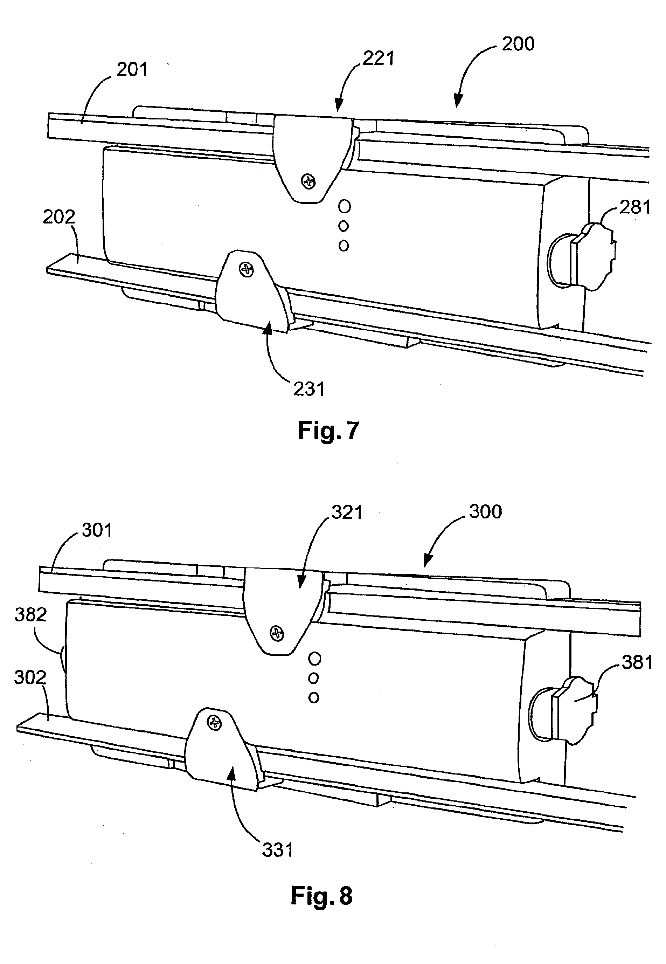

Die Figuren 7 und 8 zeigen Zentralsteuerungseinheiten 200, 300, die zur zentralen Steuerung einer solcher Art aufgebauten Rollenförderanlage mit mehreren Sieuerungseinheiten gemäß Figuren 1 - 6 dient. Diese Zentralsteuerungseinheiten weisen einerseits Energieversorgungsanschlüsse 221, 321 auf, die zum Anschluss der Energieversorgungsleitung dienen, andererseits weisen diese Zentralsteuerungseinheiten Anschlüsse 231, 331 für eine Datenbusleitung auf, um hierüber Steuerungssignale aus der Zentralsteuerungseinheit über die Datenbusleitüng an die Steuerungseinheiten zu senden und um Signale von den Steuerungseinheiten zu empfangen.

Die in Figur 7 gezeigte Zentralsteuerungseinheit 200 weist die Anschlüsse 221, 231 auf, die zum Anschluss einer Energieversorgungsleitung 201 und einer Datenbusleitung 202 ausgebildet sind. Die Anschlüsse 221 und 231 sind dabei übereinstimmend mit den zuvor erläuterten Anschlüssen 21 und 31 zum Anschluss in Durchdringungstechnik ausgeführt.

Weiterhin ist an der Zentralsteuerungseinheit 200 auf einer Frontseite eine Anschlussbuchse 281 für einen Datenbus zur Programmierung der Zentralsteuerungseinheit 200 und mit dieser über die Datenbusleitung 202 verbundene Steuerungseinheiten vorhanden. Über diese Anschlussbuchse 281 können Ablaufparameter übertragen werden, die in der Zentralsteuerungseinheit 200 abgespeichert werden und für den Betrieb der Fördereinrichtung dienen. Die Zentralsteuerungseinheit 200 beinhaltet einen Steuerungslogikbaustein, der so programmiert ist, dass er mittels Signalen, die über die Anschlussbuchse 281 übertragen werden, programmierbar ist und Programmdaten an Steuerungseinheiten, die über den Datenbusanschluss 231 angeschlossen sind, weiterleiten und von diesen empfangen und an eine Programmiereinheit, die über die Anschlussbuchse 281 angeschlossen ist, weiterleiten kann. der Steuerungslogikbaustein ist weiterhin ausgebildet, um nach einer solchermaßen erfolgten Programmierung den Förderbetrieb der Förderantriebe, Sensoren und weiterer Aktuatoren, die über die Steuerungseinheiten und die Datenbusleitung an den Datenbussanschluss 231 angeschlossen sind, zu steuern, ohne dass hierzu ein Datenein- oder -ausgang über die Anschlussbuchse 281 erforderlich ist.

Die in Figur 8 gezeigte Gateway-Zentralsteuerungseinheit 300 weist einerseits Anschlüsse 321, 331 auf, die zum Anschluss einer Energieversorgungsleitung 301 und einer Datenbusleitung 302 ausgebildet sind. Die Anschlüsse 321 und 331 sind dabei übereinstimmend mit den zuvor erläuterten Anschlüssen 21 und 31 zum Anschluss in Durchdringungstechnik ausgeführt.

Weiterhin ist an der Gateway-Zentralsteuerungseinheit 300 auf der einen Seite eine Anschlussbuchse 381 für einen Datenbus zur Programmierung der Zentralsteuerungseinheit 300 und mit dieser über die Datenbusleitung 302 verbundener Steuerungseinheiten vorhanden. Programmierung und Ablaufsteuerung erfolgen dabei analog zu derjenigen der zuvor erläuterten Zentralsteuerungseinheit 200, d.h. auch die Gateway-Zentralsteuerungseinheit 300 ist mit einem Steuerungslogikbaustein versehen, der nach einmaliger Programmierung den Förderablauf angeschlossener Aktuatoren, Förderantriebe und Sensoren autark steuern kann.

Auf der hierzu gegenüberliegenden anderen Seite ist und ein Feldbusanschluss 382 vorhanden. Dieser dient dazu Steuerungssignale aus einer externen Steuerung, beispielsweise einer SPS-Steuerung in die Zentralsteuerungseinheit 300 einzuleiten und an mit dieser über die Datenbusleitung 302 verbundene Steuerungseinheiten weiterzuleiten. Dieser Feldbusanschluss 382 dient dazu, um Steuerungssignale im laufenden Betrieb an Förderantriebe, Sensoren und weiterer Aktuatoren, die über die Steuerungseinheiten und die Datenbusleitung an den Datenbussanschluss 331 angeschlossen sind, weiterzuleiten und diese solcherart anzusteuern.

Die Gateway-Zentralsteuerungseinheit 300 kann somit einerseits in gleicher Weise wie die Zentralsteuerungseinheit 200 über die Anschlussbuchse 381 fest programmiert werden und nach einer solchen Programmierung eine Fördereinrichtung über abgespeicherte Parameter steuern. Zum anderen kann die GatewayZentralsteuerungseinheit 300 auch in einem Gateway-Betriebsmodus betrieben werden. In diesem Gateway-Betriebsmodus werden Steuerungsdaten über die Feldbusanschlussbuchse 382 in die Gateway-Zentralsteuerungseinheit 300 eingegeben und dann über die Datenbusleitung 302 an über diese angeschlossene Steuerungseinheiten weitergeleitet.

Die Zentralsteuerungseinheit 200 und die Gateway-Zentralsteuerungseinheit 300 sind dazu in ihrer Hard- und Software ausgebildet, um mit den an sie über die Datenbusleitung 202, 302 bzw. 2, 102 Steuerungseinheiten 10 bzw. 100 mittels der CAN-Bus-Datenübertragungstechnik anzusteuern und von diesen Steuerungseinheiten Signale mittels der CAN-Bus-Datenübertragungstechnik zu empfangen.

## Patentansprüche

1. Fördervorrichtung, umfassend:
- mehrere Förderzonen mit jeweils einem Förderantrieb zum Erzeugen einer Förderkraft auf einen in der Förderzone befindlichen Gegenstand,
- eine Mehrzahl von Steuerungseinheiten (10, 100), wobei jede Steuerungseinheit zumindest einer Förderzone zugeordnet ist,
- eine Datenbusleitung (2, 102, 202, 302), welche die Steuerungseinheiten miteinander verbindet, wobei:
- jede Steuerungseinheit eine Anschlussvorrichtung (31, 141) für eine Datenbusleitung aufweist und die Anschlussvorrichtung eine Querschnittsausnehmung (33, 33a,b) umfasst, in deren Bereich ein erster und ein zweiter elektrischer Kontaktstift (34a,b) angeordnet ist, die ausgebildet sind, um zwischen einem entsprechend ersten und zweiten Leiter einer in die Querschnittsausnehmung eingelegten Datenbusleitung (2) und der Steuerungseinheit einen elektrischen Kontakt herzustellen, indem eine isolierende Hülle der Datenbusleitung von den Kontaktstiften im Bereich der Querschnitssausnehmung soweit durchdringbar ist, dass der erste elektrische Kontaktstift mit dem ersten Leiter und der zweite elektrische Kontaktstift mit dem zweiten Leiter der Datenbusleitung in elektrischen Kontakt tritt, **dadurch gekennzeichnet, dass**
- die mehreren Förderzonen jeweils einen Sensor zum Erfassen eines Gegenstands in der Förderzone umfassen, wobei jede Steuerungseinheit mit dem Sensor der Förderzone signaltechnisch gekoppelt ist zum Empfangen von Signalen, welche das Vorhandensein eines Gegenstands in der Förderzone signalisieren, und mit dem Förderantrieb signaltechnisch gekoppelt ist zum Ansteuern des Förderantriebs, und
- die Datenbusleitung eine Kabelquerschnittsgeometrie aufweist, welche in eine Querschnittsausnehmung (33, 33a,b) an der Steuerungseinheit solcherart einlegbar ist, dass die Kabelquerschnittsgeometrie und die Querschnittsausnehmung eine Ausrichtung der Datenbusleitung in der Querschnittsausnehmung definiert und hierdurch ein verpolungs-sicherer Kontakt zwischen dem ersten Kontaktstift und dem ersten Leiter und zwischen dem zweiten Kontaktstift und dem zweiten Leiter hergestellt ist.

2. Fördervorrichtung nach Anspruch 1,
**dadurch gekennzeichnet, dass** die Kabelquerschnittsgeometrie asymmetrisch ausgebildet ist und dass die Kabelquerschnittsgeometrie und die Querschnittsausnehmung (33a,b) vorzugsweise zueinander kongruent sind.

3. Fördervorrichtung nach Anspruch 1 oder 2,
**gekennzeichnet durch** eine erste Steuerungseinheit (10), umfassend zwei Anschlüsse (61a,b) zum Anschluss von jeweils einem Förderantrieb und vorzugsweise weiterhin zwei Anschlüsse (62a,b) zum Anschluss von jeweils einem Sensor, von denen jeder jeweils einem der zwei Förderantriebe zugeordnet ist, wobei die erste Steuerungseinheit weiterhin ausgebildet ist, um Datenpakete über die Datenbusleitung zu empfangen und zur Ansteuerung eines der zwei Förderantriebe zu verarbeiten, welche anhand des Adressdatenblocks der Steuerungseinheit zugeordnet sind und welche anhand eines zusätzlichen Datenelements, vorzugsweise anhand des Signaldatenblocks dem einen oder dem anderen Förderantrieb bzw. Sensor zugeordnet sind.

4. Fördervorrichtung nach einem der vorhergehenden Ansprüche,
**gekennzeichnet durch** eine zweite Steuerungseinheit (100), umfassend
- eine erste Schnittstelle (161) zum Anschluss eines Förderantriebs,
- eine zweite Schnittstelle (163) zum Anschluss eines Sensors, und
- eine dritte Schnittstelle (116), welche zumindest einen Eingang und zumindest einen Ausgang aufweist und welche konfigurierbar ist für den Anschluss eines Aktuators oder eines Sensors oder einer Kombination eines Aktuators und eines Sensors.

5. Fördervorrichtung nach einem der vorhergehenden Ansprüche,
**dadurch gekennzeichnet, dass** eine, insbesondere die zweite Steuerungseinheit
- eine erste Anschlussausnehmung (141) aufweist zum Anschluss eines ersten Datenbusleitungsstrangs und
- eine zweite Anschlussausnehmung (151, 121) zum Anschluss eines zweiten Datenbusleitungsstrangs aufweist und dass
- in der ersten und zweiten Anschlussausnehmung jeweils ein erster und ein zweiter elektrischer Kontaktstift zum Kontakt mit jeweils einem ersten und zweiten Leiter einer in die Anschlussausnehmung eingelegten Datenbusleitung angeordnet ist und
- und dass innerhalb der Steuerungseinheit die beiden ersten elektrischen Kontaktstifte elektrisch miteinander verbunden sind und die beiden zweiten elektrischen Kontaktstifte elektrisch miteinander verbunden sind.

6. Fördervorrichtung nach dem vorhergehenden Anspruch,
**dadurch gekennzeichnet, dass** die zweite Anschlussausnehmung (151) oder eine weitere Anschlussausnehmung (121) an der Steuerungseinheit ausgebildet ist, um eine Datenbusleitung in einer ersten Ausrichtung und in einer zweiten, von der ersten verschiedenen Ausrichtung, insbesondere einer um 180° gedrehten Ausrichtung in die Anschlussausnehmung aufzunehmen und in beiden Ausrichtungen der erste Leiter mit dem ersten Kontaktstift und der zweite Leiter mit dem zweiten Kontaktstift in elektrischem Kontakt ist.

7. Fördervorrichtung nach einem der vorhergehenden Ansprüche,
**gekennzeichnet durch** eine als erste Zentralsteuerungseinheit (200, 300) ausgeführte Steuerungseinheit, umfassend
- eine Anschlussausnehmung (231) mit einem ersten und einem zweiten elektrischen Kontaktstift zum verpolungssicheren Kontakt mit jeweils einem ersten und zweiten Leiter einer in die Anschlussausnehmung eingelegten Datenbusleitung,
- eine zweite Busschnittstelle (281, 381, 382), insbesondere eine Feldbusschnittstelle (382) zum Anschluss einer SPS-Steuerung, und
- eine Steuerungslogik, welche ausgebildet ist, um
o in einem ersten Betriebsmodus über die zweite Busschnittstelle (281, 381) Adressierungs- und Parametrierungsdaten zu empfangen und
o in einem zweiten Betriebsmodus die über die zweite Busschnittstelle oder eine weitere Busschnittstelle (382) ausgetauschten Signale an den ersten und zweiten elektrischen Kontaktstift zu kommunizieren.

8. Fördervorrichtung nach dem vorhergehenden Anspruch,
**dadurch gekennzeichnet, dass** die Steuerungslogik weiterhin ausgebildet ist, um in einem dritten Betriebsmodus, in dem über die zweite (281, 381) oder die weitere Busschnittstelle (382) keine Daten kommuniziert werden, einen von einer externen Steuerung unabhängigen Betrieb anhand dieser Adressierungs- und Parametrierungsdaten auszuführen.

9. Fördervorrichtung nach einem der vorhergehenden Ansprüche,
**gekennzeichnet durch** ein Verlängerungsmodul, umfassend:
- eine erste und zweite Busleitungs-Anschlussvorrichtung, wobei jede Busleitungs-Anschlussvorrichtung aufweist:
o eine Querschnittsausnehmung,
o einen ersten und zweiten elektrischen Kontaktstift, die im Bereich der Querschnittsausnehmung angeordnet und ausgebildet sind, um zwischen einem entsprechend ersten und zweiten Leiter einer in die Querschnittsausnehmung eingelegten Datenbusleitung und der Steuerungseinheit einen elektrischen Kontakt herzustellen, indem eine isolierende Hülle der Datenbusleitung von den Kontaktstiften im Bereich der Querschnitssausnehmung soweit durchdringbar ist, dass der erste elektrische Kontaktstift mit dem ersten Leiter und der zweite elektrische Kontaktstift mit dem zweiten Leiter der Datenbusleitung in elektrischen Kontakt tritt,
**dadurch** gekennzeichnet, dass
- jede Querschnittsausnehmung asymmetrisch ausgebildet ist und so eine einzige Ausrichtung einer darin eingelegten Datenbusleitung definiert und hierdurch ein verpolungssicherer Kontakt zwischen dem ersten Kontaktstift und dem ersten Leiter und zwischen dem zweiten Kontaktstift und dem zweiten Leiter hergestellt ist, und
- die erste Querschnittsausnehmung in einer ersten Busleitungsführung angeordnet ist, die sich zu einer ersten Seite des Verlängerungsmoduls solcherart erstreckt, so dass eine erste Busleitung von dieser ersten Seite in die erste Querschnittsausnehmung geführt und dort in nur einer definierten Ausrichtung eingelegt werden kann,
- die zweite Querschnittsausnehmung in einer zweiten Busleitungsführung angeordnet ist, die sich zu von der ersten Seite des Verlängerungsmoduls solcherart zu einer zweiten Seite des Verlängerungsmoduls erstreckt, so dass eine zweite Busleitung von dieser ersten Seite oder von dieser zweiten Seite in die zweite Querschnittsausnehmung geführt und dort in nur einer definierten Ausrichtung, welche mit der **durch** die erste Querschnittsausnehmung definierten Ausrichtung übereinstimmt, eingelegt werden kann,
- der erste Kontaktstift der ersten Querschnittsausnehmung innerhalb des Verlängerungsmoduls mit dem ersten Kontaktstift der zweiten Ausnehmung in elektrischer Verbindung steht,
- der zweite Kontaktstift der ersten Querschnittsausnehmung innerhalb des Verlängerungsmoduls mit dem zweiten Kontaktstift der zweiten Ausnehmung in elektrischer Verbindung steht.

10. Verfahren zum Fördern von Gegenständen, mit den Schritten:
- Bereitstellen einer Förderstrecke mit einer Mehrzahl von Förderzonen, die jeweils einen Fördersensor und einen Förderantrieb umfassen,
- Bereitstellen einer Mehrzahl von Steuerungseinheiten, welche jeweils zumindest eine Schnittstelle für einen Sensor und zumindest eine Schnittstelle für einen Förderantrieb aufweisen,
- Verbinden des Förderantriebs und Sensors von jeder Förderzone mit einer der Steuerungseinheiten, wobei
- die Steuerungseinheiten untereinander mittels einer Busleitung verbunden sind und Daten über zwei Leiter der Busleitung untereinander austauschen,
- die Busleitung einen Querschnitt ausweist, der zumindest teilweise kongruent zu einer Querschnittsausnehmung an den Steuerungseinheiten ist und in diese Querschnittsausnehmung in nur solcher Ausrichtung einlegbar ist, dass jeder Leiter der Busleitung mittels jeweils einem im Bereich der Querschnittsausnehmung angeordneten Kontaktstift mit der Steuerungseinheit elektrisch verbunden, wird, indem der jeweilige Kontaktstift eine elektrisch isolierender Umhüllung der Busleitung durchdringt und verpolungssicher in elektrischen Kontakt mit dem jeweiligen Leiter tritt.

11. Verfahren nach Anspruch 10,
**dadurch gekennzeichnet, dass**
- zwei Förderantriebe und zwei Sensoren an eine Steuerungseinheit signaltechnisch angeschlossen werden, und
- von jedem der zwei Förderantriebe und Sensoren Daten über die Busleitung empfangen und gesendet werden, welche als Datenpaket mit einem der Steuerungseinheit, an welche die Förderantriebe und Sensoren angeschlossen sind, zugeordneten Adressdatenblock und einem Signaldatenblock, welcher eine, dem jeweiligen Förderantrieb bzw. Sensor zugeordnete Signaldateneinheit kommuniziert werden.

12. Verfahren nach Anspruch 10 oder 11,
**dadurch gekennzeichnet, dass**
- in einem der Förderung der Gegenstände vorhergehenden Parametrierschritt jeder Förderzone Förderparameter und vorzugsweise ein Fördermodus zugewiesen werden, indem entsprechende Förderparameter und gegebenenfalls ein Fördermodus an die der Förderzone zugeordnete Steuerungseinheit in dem Parametrierschritt zugewiesen werden, und
- jede Förderzone die Gegenstände nachfolgend mit den ihr zugewiesenen Förderparameteren und dem ihr zugewiesenen Fördermodus fördert.

13. Verfahren nach einem der vorhergehenden Ansprüche 10-12,
bei dem die Förderantriebe in einem sich in Förderrichtung erstreckenden Fördergestell befestigt sind und eine erste Busleitung in einem ersten Bereich auf einer ersten Seite des Fördergestells verlegt wird und eine zweite Busleitung in einem in Förderrichtung an den ersten Bereich anschließenden zweiten Bereich auf einer der ersten Seite gegenüberliegenden Seite angeordnet wird,
**dadurch gekennzeichnet, dass**
- im Übergangsbereich zwischen dem ersten und dem zweiten Bereich eine Steuerungseinheit angeordnet wird, welche
o die erste Busleitung in einer ersten Querschnittsausnehmung aufnimmt,
o die zweite Busleitung in einer zweiten Querschnittsausnehmung aufnimmt,
o mittels jeweils in der ersten und zweiten Querschnittsausnehmung angeordnete erste und zweite Kontaktstifte die Leiter der ersten und zweiten Busleitung elektrisch kontaktiert,
- wobei die beiden ersten Kontaktstifte der ersten und zweiten Querschnittsausnehmung elektrisch miteinander innerhalb der Steuerungseinheit verbunden sind, und
- die beiden zweiten Kontaktstifte der ersten und zweiten Querschnittsausnehmung elektrisch miteinander innerhalb der Steuerungseinheit verbunden sind,
- wobei die erste Busleitung auf der ersten Seite des Fördergestells in Förderrichtung verläuft und
- die zweite Busleitung auf der ersten Seite entgegen der Förderrichtung verläuft und in einer 180°-Schleife auf die zweite Seite geführt wird und dort in Förderrichtung verläuft.

14. Verfahren nach einem der vorhergehenden Ansprüche 10-13,
bei dem die Förderantriebe in einem sich in Förderrichtung erstreckenden Fördergestell befestigt sind und eine dritte Busleitung in einem dritten Bereich auf einer ersten Seite des Fördergestells verlegt wird und eine vierte Busleitung in einem in Förderrichtung an den dritten Bereich anschließenden vierten Bereich auf der ersten Seite angeordnet wird,
**dadurch gekennzeichnet, dass**
- im Übergangsbereich zwischen dem dritten und dem vierten Bereich eine Steuerungseinheit angeordnet wird, welche
o die dritte Busleitung in einer ersten Querschnittsausnehmung aufnimmt,
o die vierte Busleitung in einer zweiten Querschnittsausnehmung aufnimmt,
o mittels jeweils in der ersten und zweiten Querschnittsausnehmung angeordnete erste und zweite Kontaktstifte die Leiter der dritten und vierten. Busleitung elektrisch kontaktiert,
- wobei die beiden ersten Kontaktstifte der ersten und zweiten Querschnittsausnehmung elektrisch miteinander innerhalb der Steuerungseinheit verbunden sind, und
- die beiden zweiten Kontaktstifte der ersten und zweiten Querschnittsausnehmung elektrisch miteinander innerhalb der Steuerungseinheit verbunden sind.

15. Verfahren nach den vorhergehenden Ansprüchen 13 und 14, bei dem
- - der zweite und der dritte Bereich als übereinstimmender Bereich und die zweite und dritte Busleitung als übereinstimmende Busleitung ausgebildet wird,
- - oder der vierte und der erste Bereich als ein übereinstimmender Bereich und die vierte und erste Busleitung als übereinstimmende Busleitung ausgebildet wird,
**dadurch gekennzeichnet, dass** eine erste Steuerungseinheit zwischen dem ersten und dem zweiten Bereich angeordnet wird und eine mit der ersten Steuerungseinheit übereinstimmende zweite Steuerungseinheit zwischen dem dritten und dem vierten Bereich angeordnet wird.

16. Verfahren nach den vorhergehenden Ansprüchen 13 und 14, bei dem der erste und der dritte Bereich als ein übereinstimmender Bereich und die erste und dritte Busleitung als übereinstimmende Busleitung ausgebildet wird, **dadurch gekennzeichnet, dass** eine Steuerungseinheit zwischen dem ersten und dem zweiten Bereich und zwischen dem dritten und dem vierten Bereich angeordnet wird die Steuerungseinheit eine erste Querschnittsausnehmung für die erste Busleitung, eine zweite Querschnittsausnehmung , für die erste Busleitung und eine dritte Querschnittsausnehmung für die vierte Busleitung aufweist.

17. Verwendung einer Busleitung zur Datenkommunikation zwischen zwei Förderzonen in einer Fördervorrichtung,
**dadurch gekennzeichnet, dass** im Bereich einer Querschnittsausnehmung einer eine erste Förderzone steuernden, ersten Steuerungseinheit ein erster und ein zweiter elektrischer Kontaktstift angeordnet ist, zwischen einem entsprechend ersten und zweiten Leiter einer in die Querschnittsausnehmung eingelegten Datenbusleitung und der ersten Steuerungseinheit ein elektrischer Kontakt hergestellt wird, indem eine isolierende Hülle der Datenbusleitung von den Kontaktstiften im Bereich der Querschnitssausnehmung soweit durchdrungen wird, dass der erste elektrische Kontaktstift mit dem ersten Leiter und der zweite elektrische Kontaktstift mit dem zweiten Leiter der Datenbusleitung in elektrischen Kontakt tritt,
dass im Bereich einer Querschnittsausnehmung einer eine zweite Förderzone steuernden, zweiten Steuerungseinheit ein erster und ein zweiter elektrischer Kontaktstift angeordnet ist, zwischen dem entsprechend ersten und zweiten Leiter der in die Querschnittsausnehmung eingelegten Datenbusleitung und der zweiten Steuerungseinheit ein elektrischer Kontakt hergestellt wird, indem die isolierende Hülle der Datenbusleitung von den Kontaktstiften der zweiten Steuerungseinheit im Bereich der Querschnittsausnehmung soweit durchdrungen wird, dass der erste elektrische Kontaktstift mit dem ersten Leiter und der zweite elektrische Kontaktstift mit dem zweiten Leiter der Datenbusleitung in elektrischen Kontakt tritt, und
dass die Datenbusleitung zumindest zweiadrig ist und eine Kabelquerschnittsgeometrie aufweist, welche in die Querschnittsausnehmung der ersten und der zweiten Steuerungseinheit solcherart eingelegt wird, dass die Kabelquerschnittsgeometrie und die Querschnittsausnehmung genau eine Ausrichtung der Datenbusleitung in der Querschnittsausnehmung definieren und hierdurch eine verpolungssichere Verbindung zwischen der ersten und der zweiten Steuerungseinheit hergestellt wird.

## Claims

1. Conveyor device, comprising:
- several conveyor zones, each having a conveyor drive for generating a conveying force on an object disposed in the conveyor zone,
- a plurality of control units (10, 100), every control unit being assigned to at least one conveyor zone, a data bus cable (2, 102, 202, 302) which connects the control units to one another, and
- every control unit has a connector device (31, 141) for a data bus cable and the connector device comprises a cross-sectional recess (33, 33a,b) in the region of which a first and a second electrical contact pin (34a,b) are disposed, which are configured to establish an electrical contact between a first and second conductor of a data bus cable (2) inserted accordingly in the cross-sectional recess and the control unit due to the fact that the contact pins in the region of the cross-sectional recess are able to penetrate an insulating sheath of the data bus cable to the extent that the first electrical contact pin makes electrical contact with the first conductor and the second electrical contact pin makes electrical contact with the second conductor of the data bus cable, **characterised in that**
- the several conveyor zones each comprise a sensor for detecting an object in the conveyor zone, every control unit being coupled with the sensor of the conveyor zone by signal communication in order to receive signals signalling the presence of an object in the conveyor zone and being coupled with the conveyor drive by signal communication in order to activate the conveyor drive, and
- the data bus cable has a cable cross-sectional geometry which can be inserted in a cross-sectional recess (33, 33a,b) on the control unit in such a way that the cable cross-sectional geometry and the cross-sectional recess define an orientation of the data bus cable in the cross-sectional recess and thereby establish a contact protected against polarity reversal between the first contact pin and the first conductor and between the second contact pin and the second conductor.

2. Conveyor device as claimed in claim 1,
**characterised in that** the cable cross-sectional geometry is of an asymmetrical design and the cable cross-sectional geometry and the cross-sectional recess (33a,b) are preferably congruent with one another.

3. Conveyor device as claimed in claim 1 or 2,
**characterised by** a first control unit (10) comprising two connectors (61a,b) for connecting a conveyor drive respectively and preferably also two connectors (62a,b) for connecting a sensor respectively, each of which co-operates respectively with one of the two conveyor drives, the first control unit further being configured to receive via the data bus cable and process data packets which are assigned to the control unit on the basis of the address data block and which are assigned to one or the other conveyor drive respectively sensor on the basis of an additional data element, preferably on the basis of the signal data block, in order to activate one of the two conveyor drives.

4. Conveyor device as claimed in one of the preceding claims,
**characterised by** a second control unit (100), comprising
- a first interface (161) for connecting a conveyor drive,
- a second interface (163) for connecting a sensor, and
- a third interface (116) having at least one input and at least one output and which can be configured to connect an actuator or a sensor or a combination of an actuator and a sensor.

5. Conveyor device as claimed in one of the preceding claims,
**characterised in that** one, in particular the second, control unit
- comprises a first connection recess (141) for connecting a first data bus cable run and
- a second connection recess (151, 121) for connecting a second data bus cable run and
- a first and a second electrical contact pin is disposed respectively in the first and second connection recess for contacting a first and second conductor respectively of a data bus cable inserted in the connection recess and
- the two first electrical contact pins are electrically connected to one another and the two second electrical contact pins are electrically connected to one another inside the control unit.

6. Conveyor device as claimed in the preceding claim,
**characterised in that** the second connection recess (151) or another connection recess (121) is provided on the control unit in order to receive a data bus cable in a first orientation and in a second orientation different from the first one, in particular an orientation rotated by 180° in the connection recess, and the first conductor is in electrical contact with the first contact pin and the second conductor is in electrical contact with the second contact pin in both orientations.

7. Conveyor device as claimed in one of the preceding claims,
**characterised by** a control unit configured as a first central control unit (200, 300), comprising
- a connection recess (231) with a first and a second electrical contact pin for establishing a contact protected against polarity reversal respectively with a first and second conductor of a data bus cable inserted in the connection recess,
- a second bus interface (281, 381, 382), in particular a field bus interface (382), for connecting a PLC controller, and
- a control logic which is configured to
o receive addressing and parameter-setting data via the second bus interface (281, 381) in a first operating mode and
o in a second operating mode to communicate the signals exchanged via the second bus interface or another bus interface (382) to the first and second electrical contact pin.

8. Conveyor device as claimed in the preceding claim, **characterised in that** in a third operating mode in which no data is communicated via the second (281, 381) or the other bus interface (382), the control logic is further configured to implement an operation on the basis of this addressing and parameter-setting data independently of an external controller.

9. Conveyor device as claimed in one of the preceding claims, **characterised by** an extension module, comprising:
- a first and second bus cable connector device, each bus cable connector device comprising:
o a cross-sectional recess,
o a first and second electrical contact pin which are disposed in the region of the cross-sectional recess and which are configured to establish an electrical contact between a first and second conductor of the data bus cable inserted accordingly in the cross-sectional recess and the control unit due to the fact that the contact pins in the region of the cross-sectional recess are able to penetrate an insulating sheath of the data bus cable to the extent that the first electrical contact pin makes electrical contact with the first conductor and the second electrical contact pin makes electrical contact with the second conductor of the data bus cable,
**characterised in that**
- every cross-sectional recess is of an asymmetrical design and thus defines a single orientation of a data bus cable inserted therein and a contact protected against polarity reversal is established between the first contact pin and the first conductor and between the second contact pin and the second conductor as a result, and
- the first cross-sectional recess is disposed in a first bus cable run which extends to a first side of the extension module in such a way that a first bus cable is run from this first side into the first cross-sectional recess and can be inserted there in only one defined orientation,
- the second cross-sectional recess is disposed in a second bus cable run which extends from the first side of the extension module to a second side of the extension module in such a way that a second bus cable is run from this first side or from this second side into the second cross-sectional recess and can be inserted there in only one defined orientation which is congruent with the orientation defined by the first cross-sectional recess,
- the first contact pin of the first cross-sectional recess is electrically connected to the first contact pin of the second recess inside the extension module,
- the second contact pin of the first cross-sectional recess is electrically connected to the second contact pin of the second recess inside the extension module.

10. Method for conveying objects, comprising the following steps:
- providing a conveyor line having a plurality of conveyor zones, each comprising a conveyor sensor and a conveyor drive,
- providing a plurality of control units, each comprising at least one interface for a sensor and at least one interface for a conveyor drive,
- connecting the conveyor drive and sensor of every conveyor zone to one of the control units, and
- the control units are connected to one another by means of a bus cable and exchange data with one another via two conductors of the bus cable,
- the bus cable has a cross-section that is at least partially congruent with a cross-sectional recess on the control units and can be inserted in this cross-sectional recess in only one orientation such that every conductor of the bus cable is electrically connected to the control unit by means of a respective contact pin disposed in the region of the cross-sectional recess due to the fact that the respective contact pin penetrates an electrically insulating sheathing of the bus cable and establishes an electrical contact protected against polarity reversal with the respective conductor.

11. Method as claimed in claim 10,
**characterised in that**
- two conveyor drives and two sensors are connected to a control unit by signal communication, and
- data is received from and transmitted to each of the two conveyor drives and sensors via the bus cable, which is communicated to a signal data unit assigned to the respective conveyor drive or sensor as a data packet with an address data block assigned to the control unit to which the conveyor drives and sensors are connected and a signal data block.

12. Method as claimed in claim 10 or 11,
**characterised in that**
- in a parameter-setting step prior to conveying the objects, each conveyor zone is assigned conveying parameters and preferably a conveying mode by assigning appropriate conveying parameters and optionally a conveying mode to the control unit assigned to the conveyor zone during the parameter-setting step, and
- every conveyor zone then conveys the objects on the basis of the conveying parameters assigned to it and the conveying mode assigned to it.

13. Method as claimed in one of preceding claims 10-12,
whereby the conveyor drives are secured in a conveyor frame extending in the conveying direction and a first bus cable is laid in a first region on a first side of the conveyor frame and a second bus cable is laid in a second region adjoining the first region in the conveying direction disposed on a side lying opposite the first side,
**characterised in that**
- disposed in the transition region between the first and the second region is a control unit which
o receives the first bus cable in a first cross-sectional recess,
o receives the second bus cable in a second cross-sectional recess,
o by means of first and second contact pins disposed in the first and second cross-sectional recess respectively, electrically contacts the conductors of first and second bus cable,
- the two first contact pins of the first and second cross-sectional recess being electrically connected to one another inside the control unit, and
- the two second contact pins of the first and second cross-sectional recess being electrically connected to one another inside the control unit,
- and the first bus cable extends in the conveying direction on the first side of the conveyor frame and
- and the second bus cable extends in the direction opposite the conveying direction on the first side and is run in a 180° loop to the second side where it extends in the conveying direction.

14. Method as claimed in one of preceding claims 10-13,
whereby the conveyor drives are secured in a conveyor frame extending in the conveying direction and a third bus cable is laid in a third region on a first side of the conveyor frame and a fourth bus cable is disposed on the first side in a fourth region adjoining the third region in the conveying direction, **characterised in that**
- disposed in the transition region between the third and the fourth region is a control unit which
o receives the third bus cable in a first cross-sectional recess,
o receives the fourth bus cable in a second cross-sectional recess,
o by means of the first and second contact pins disposed in the first and second cross-sectional recess respectively, electrically contacts the conductors of the third and fourth bus cable,
- the two first contact pins of the first and second cross-sectional recess being electrically connected to one another inside the control unit, and
- the two second contact pins of the first and second cross-sectional recess being electrically connected to one another inside the control unit.

15. Method as claimed in preceding claims 13 and 14, whereby
- the second and the third region are configured as congruent regions and the second and third bus cable are configured as congruent bus cables,
- or the fourth and the first region are configured as congruent regions and the fourth and first bus cable are configured as congruent bus cables,
**characterised in that** a first control unit is disposed between the first and second region and a second control unit congruent with the first control unit is disposed between the third and fourth region.

16. Method as claimed in preceding claims 13 and 14, whereby the first and the third region are configured as congruent regions and the first and third bus cable are configured as congruent bus cables, **characterised in that** a control unit is disposed between the first and second region and between the third and fourth region, the control unit having a first cross-sectional recess for the first bus cable, a second cross-sectional recess for the first bus cable and a third cross-sectional recess for the fourth bus cable.

17. Use of a bus cable to communicate data between two conveyor zones in a conveyor device,
**characterised in that** a first and a second electrical contact pin are disposed in the region of a cross-sectional recess of a first control unit controlling a first conveyor zone, an electrical contact is established between a first and second conductor of a data bus cable inserted accordingly in the cross-sectional recess and the first control unit due to the fact that an insulating sheath of the data bus cable is penetrated by the contact pins in the region of the cross-sectional recess to the extent that the first electrical contact pin makes electrical contact with the first conductor and the second electrical contact pin makes electrical contact with the second conductor of the data bus cable,
a first and a second electrical contact pin are disposed in the region of a cross-sectional recess of a second control unit controlling a second conveyor zone, an electrical contact is established between the first and second conductor of the data bus cable inserted accordingly in the cross-sectional recess and the second control unit due to the fact that the insulating sheath of the data bus cable is penetrated by the contact pins of the second control unit in the region of the cross-sectional recess to the extent that the first electrical contact pin makes electrical contact with the first conductor and the second electrical contact pin makes electrical contact with the second conductor of the data bus cable, and
the data bus cable is of an at least two-core type and has a cable cross-sectional geometry which is inserted in the cross-sectional recess of the first and the second control unit in such a way that the cable cross-sectional geometry and the cross-sectional recess exactly define an orientation of the data bus cable in the cross-sectional recess and a connection protected against polarity reversal is thus established between the first and the second control unit.

## Revendications

1. Dispositif de transport comprenant :
- plusieurs zones de transport avec respectivement un entraînement de transport pour la génération d'une force de transport sur un objet se trouvant dans la zone de transport,
- une pluralité d'unités de commande (10, 100), chaque unité de commande étant associée à au moins une zone de transport,
- une ligne de bus de données (2, 102, 202, 302) qui relie entre elles les unités de commande :
- chaque unité de commande présentant un dispositif de raccordement (31, 141) pour une ligne de bus de données et le dispositif de raccordement comportant un évidement de section (33, 33a, b), dans la zone duquel une première et une seconde tige de contact électrique (34a, b) sont agencées, lesquelles sont réalisées afin d'établir un contact électrique entre un premier et un second conducteur respectivement d'une ligne de bus de données (2) insérée dans l'évidement de section et l'unité de commande en ce qu'une enveloppe isolante de la ligne de bus de données peut être traversée par les tiges de contact dans la zone de l'évidement de section jusqu'à ce que la première tige de contact électrique entre en contact électrique avec le premier conducteur et la seconde tige de contact électrique entre en contact électrique avec le second conducteur de la ligne de bus de données,
**caractérisé en ce que**
- les plusieurs zones de transport comportent chacune un capteur pour la détection d'un objet dans la zone de transport, chaque unité de commande étant couplée en signal avec le capteur de la zone de transport pour la réception de signaux qui signalent la présence d'un objet dans la zone de transport, et étant couplée en signal avec l'entraînement de transport pour la commande de l'entraînement de transport et
- la ligne de bus de données présente une géométrie de section de câble qui peut être insérée dans un évidement de section (33, 33a, b) sur l'unité de commande de telle manière que la géométrie de section de câble et l'évidement de section définissent une orientation de la ligne de bus de données dans l'évidement de section et par là-même, un contact protégé contre l'inversion de polarité entre la première tige de contact et le premier conducteur et entre la seconde tige de contact et le second conducteur soit établi.

2. Dispositif de transport selon la revendication 1,
**caractérisé en ce que** la géométrie de section de câble est réalisée de manière asymétrique et **en ce que** la géométrie de section de câble et l'évidement de section (33a, b) sont congruents de préférence l'un à l'autre.

3. Dispositif de transport selon la revendication 1 ou 2,
**caractérisé par** une première unité de commande (10) comprenant deux raccords (61a, b) pour le raccordement de respectivement un entraînement de transport et de préférence en outre deux raccords (62a, b) pour le raccordement de respectivement un capteur, dont chacun respectivement est associé à un des deux entraînements de transport, la première unité de commande étant en outre réalisée afin de recevoir des paquets de données par la ligne de bus de données et de les traiter pour la commande d'un des deux entraînements de transport qui sont associés à l'aide du bloc de données d'adresse à l'unité de commande et qui sont associés à l'aide d'un élément de données supplémentaire, de préférence à l'aide du bloc de données de signal à l'un ou l'autre entraînement de transport ou capteur.

4. Dispositif de transport selon l'une quelconque des revendications précédentes,
**caractérisé par** une seconde unité de commande (100) comprenant
- une première interface (161) pour le raccordement d'un entraînement de transport,
- une deuxième interface (163) pour le raccordement d'un capteur et
- une troisième interface (116) qui présente au moins une entrée et au moins une sortie et qui est configurable pour le raccordement d'un actionneur ou d'un capteur ou d'une combinaison d'un actionneur et d'un capteur.

5. Dispositif de transport selon l'une quelconque des revendications précédentes,
**caractérisé en ce qu'**une, en particulier la seconde unité de commande
- présente un premier évidement de raccordement (141) pour le raccordement d'un premier brin de ligne de bus de données et
- un second évidement de raccordement (151, 121) pour le raccordement d'un second brin de ligne de bus de données et **en ce que**
- dans le premier et second évidement de raccordement, respectivement une première et une seconde tige de contact électrique sont agencées pour le contact avec respectivement un premier et second conducteur d'une ligne de bus de données insérée dans l'évidement de raccordement et
- et **en ce que** dans l'unité de commande, les deux premières tiges de contact électriques sont reliées électriquement entre elles et les deux secondes tiges de contact électriques sont reliées électriquement entre elles.

6. Dispositif de transport selon la revendication précédente,
**caractérisé en ce que** le second évidement de raccordement (151) ou un autre évidement de raccordement (121) est réalisé sur l'unité de commande afin de recevoir une ligne de bus de données dans une première orientation et dans une seconde orientation différente de la première, en particulier une orientation tournée de 180° dans l'évidement de raccordement et dans les deux orientations, le premier conducteur est en contact électrique avec la première tige de contact et le second conducteur est en contact électrique avec la seconde tige de contact.

7. Dispositif de transport selon l'une quelconque des revendications précédentes,
**caractérisé par** une unité de commande réalisée comme première unité de commande centrale (200, 300) comprenant
- un évidement de raccordement (231) avec une première et une seconde tige de contact électrique pour le contact protégé contre l'inversion de polarité avec respectivement un premier et second conducteur d'une ligne de bus de données insérée dans l'évidement de raccordement,
- une seconde interface de bus (281, 381, 382), en particulier une interface de bus de champ (382) pour le raccordement d'une commande SPS et
- une logique de commande qui est réalisée afin de
- recevoir des données d'adressage et de paramétrage dans un premier mode de fonctionnement par la seconde interface de bus (281, 381) et
- communiquer dans un second mode de fonctionnement les signaux remplacés par la seconde interface de bus ou une autre interface de bus (382) à la première et seconde tige de contact électrique.

8. Dispositif de transport selon la revendication précédente,
**caractérisé en ce que** la logique de commande est en outre réalisée afin de réaliser dans un troisième mode de fonctionnement, dans lequel aucune donnée n'est communiquée par la seconde (281, 381) ou l'autre interface de bus (382), un fonctionnement indépendant d'une commande externe à l'aide de ces données d'adressage et de paramétrage.

9. Dispositif de transport selon l'une quelconque des revendications précédentes, **caractérisé par** un module de prolongement, comprenant :
- un premier et second dispositif de raccordement de ligne de bus, chaque dispositif de raccordement de ligne de bus présentant :
- un évidement de section,
- une première et seconde tige de contact électrique qui sont agencées et réalisées dans la zone de l'évidement de section afin d'établir un contact électrique entre un premier et second conducteurs respectivement d'une ligne de bus de données insérée dans l'évidement de section et l'unité de commande en ce qu'une enveloppe isolante de la ligne de bus de données peut être traversée par les tiges de contact dans la zone de l'évidement de section jusqu'à ce que la première tige de contact électrique entre en contact électrique avec le premier conducteur et la seconde tige de contact électrique entre en contact électrique avec le second conducteur de la ligne de bus de données,
**caractérisé en ce que**
- chaque évidement de section est réalisé de manière asymétrique et définit ainsi une orientation unique d'une ligne de bus de données insérée dedans et par là-même, un contact protégé contre l'inversion de polarité entre la première tige de contact et le premier conducteur et entre la seconde tige de contact et le second conducteur est établi et
- le premier évidement de section est agencé dans un premier guidage de lignes de bus qui s'étend vers un premier côté du module de prolongement de telle manière qu'une première ligne de bus puisse être guidée de ce premier côté dans le premier évidement de section et de là insérée dans une seule orientation définie,
- le second évidement de section est agencé dans un second guidage de ligne de bus qui s'étend du premier côté du module de prolongement à un second côté du module de prolongement de telle manière qu'une seconde ligne de bus puisse être guidée de ce premier côté ou de ce second côté dans le second évidement de section et de là insérée dans une seule orientation définie qui concorde avec l'orientation définie par le premier évidement de section,
- la première tige de contact du premier évidement de section est en liaison électrique dans le module de prolongement avec la première tige de contact du second évidement,
- la seconde tige de contact du premier évidement de section est en liaison électrique dans le module de prolongement avec la seconde tige de contact du second évidement.

10. Procédé de transport d'objets avec les étapes de :
- mise à disposition d'une voie de transport avec une pluralité de zones de transport qui comportent chacune un capteur de transport et un entraînement de transport,
- mise à disposition d'une pluralité d'unités de commande qui présentent chacune au moins une interface pour un capteur et au moins une interface pour un entraînement de transport,
- liaison de l'entraînement de transport et du capteur de chaque zone de transport à l'une des unités de commande,
- les unités de commande étant reliées entre elles à l'aide d'une ligne de bus et échangeant des données par deux conducteurs de la ligne de bus entre elles,
- la ligne de bus présentant une section qui est au moins en partie congruente à un évidement de section sur les unités de commande et peut être insérée dans cet évidement de section seulement dans une telle orientation que chaque conducteur de la ligne de bus soit relié électriquement à l'aide de respectivement une tige de contact agencée dans la zone de l'évidement de section à l'unité de commande en ce que la tige de contact respective traverse une enveloppe électroisolante de la ligne de bus et entre avec une protection contre l'inversion de polarité en contact électrique avec le conducteur respectif.

11. Procédé selon la revendication 10,
**caractérisé en ce que**
- deux entraînements de transport et deux capteurs sont raccordés en signal à une unité de commande et
- de chacun des deux entraînements de transport et capteurs, des données sont reçues et émises par la ligne de bus, lesquelles sont communiquées sous forme de paquet de données avec un bloc de données d'adresse associé à l'unité de commande, à laquelle les entraînements de transport et capteurs sont raccordés, et un bloc de données de signal qui présente une unité de données de signal associée à l'entraînement de transport ou capteur respectif.

12. Procédé selon la revendication 10 ou 11,
**caractérisé en ce que**
- dans une étape de paramétrage précédant le transport des objets, des paramètres de transport et de préférence un mode de transport sont attribués à chaque zone de transport, **en ce que** des paramètres de transport conespondants et éventuellement un mode de transport sont attribués sur l'unité de commande associée à la zone de transport dans l'étape de paramétrage et
- chaque zone de transport transporte les objets par la suite avec les paramètres de transport qui lui sont attribués et le mode de transport qui lui est attribué.

13. Procédé selon l'une quelconque des revendications précédentes 10 à 12,
pour lequel les entraînements de transport sont fixés dans un bâti de transport s'étendant dans le sens de transport et une première ligne de bus est posée dans une première zone sur un premier côté du bâti de transport et une seconde ligne de bus est agencée dans une seconde zone contiguë à la première zone dans le sens de transport sur un côté opposé au premier côté,
**caractérisé en ce que**
- dans la zone de transition entre la première et la seconde zone, une unité de commande est agencée, laquelle
- reçoit la première ligne de bus dans un premier évidement de section,
- reçoit la seconde ligne de bus dans un second évidement de section,
- les conducteurs de la première et seconde ligne de bus établissent le contact électrique à l'aide respectivement de première et seconde tige de contact agencées dans le premier et second évidement de section,
- les deux premières tiges de contact du premier et second évidement de section étant reliées électriquement l'une à l'autre dans l'unité de commande et
- les deux secondes tiges de contact du premier et second évidement de section étant reliées électriquement l'une à l'autre dans l'unité de commande,
- la première ligne de bus s'étendant sur le premier côté du bâti de transport dans le sens de transport et
- la seconde ligne de bus s'étendant sur le premier côté dans le sens contraire au sens de transport et étant guidée dans une boucle de 180° sur le second côté et s'étendant de là dans le sens de transport.

14. Procédé selon l'une quelconque des revendications précédentes 10 à 13,
pour lequel les entraînements de transport sont fixés dans un bâti de transport s'étendant dans le sens de transport et une troisième ligne de bus est posée dans une troisième zone sur un premier côté du bâti de transport et une quatrième ligne de bus est agencée dans une quatrième zone contiguë à la troisième zone dans le sens de transport sur le premier côté,
**caractérisé en ce que**
- dans la zone de transition entre la troisième et la quatrième zone, une unité de commande est agencée, laquelle
- reçoit la troisième ligne de bus dans un premier évidement de section,
- reçoit la quatrième ligne de bus dans un second évidement de section,
- les conducteurs de la troisième et quatrième ligne de bus établissent le contact électrique à l'aide respectivement de première et seconde tiges de contact agencées dans le premier et second évidement de section,
- les deux premières tiges de contact du premier et second évidement de section étant reliées électriquement l'une à l'autre dans l'unité de commande et
- les deux secondes tiges de contact du premier et second évidement de section étant reliées électriquement l'une à l'autre dans l'unité de commande.

15. Procédé selon les revendications précédentes 13 et 14, pour lequel
- la deuxième et la troisième zone sont réalisées comme zone concordante et la deuxième et troisième ligne de bus sont réalisées comme ligne de bus concordante,
- ou la quatrième et la première zone sont réalisées comme zone concordante et la quatrième et première ligne de bus sont réalisées comme ligne de bus concordante,
**caractérisé en ce qu'**une première unité de commande est agencée entre la première et la seconde zone et une seconde unité de commande concordante avec la première unité de commande est agencée entre la troisième et la quatrième zone.

16. Procédé selon les revendications précédentes 13 et 14, pour lequel la première et la troisième zone sont réalisées comme une zone concordante et la première et troisième ligne de bus sont réalisées comme une ligne de bus concordante, **caractérisé en ce qu'**une unité de commande est agencée entre la première et la deuxième zone et entre la troisième et la quatrième zone, l'unité de commande présente un premier évidement de section pour la première ligne de bus, un deuxième évidement de section pour la première ligne de bus et un troisième évidement de section pour la quatrième ligne de bus.

17. Utilisation d'une ligne de bus pour la communication de données entre deux zones de transport dans un dispositif de transport,
**caractérisée en ce qu'**une première et une seconde tige de contact électrique sont agencées dans la zone d'un évidement de section d'une première unité de commande commandant une première zone de transport, entre un premier et second conducteur respectivement d'une ligne de bus de données insérée dans l'évidement de section et la première unité de commande, un contact électrique est établi **en ce qu'**une enveloppe isolante de la ligne de bus de données peut être traversée par les tiges de contact dans la zone de l'évidement de section jusqu'à ce que la première tige de contact électrique entre en contact électrique avec le premier conducteur et la seconde tige de contact électrique entre en contact électrique avec le second conducteur de la ligne de bus de données,
**en ce qu'**une première et une seconde tige de contact électrique sont agencées dans la zone d'un évidement de transport d'une seconde unité de commande commandant une seconde zone de transport, entre les premier et second conducteurs respectivement de la ligne de bus de données insérée dans l'évidement de section et la seconde unité de commande est établi un contact électrique, **en ce que** l'enveloppe isolante de la ligne de bus de données peut être traversée par les tiges de contact de la seconde unité de commande dans la zone de l'évidement de section jusqu'à ce que la première tige de contact électrique entre en contact électrique avec le premier conducteur et la seconde tige de contact électrique entre en contact électrique avec le second conducteur de la ligne de bus de données, et
la ligne de bus de données est au moins à deux conducteurs et présente une géométrie de section de câble qui est insérée dans l'évidement de section de la première et seconde unité de commande de telle manière que la géométrie de section de câble et l'évidement de section définissent précisément une orientation de la ligne de bus de données dans l'évidement de section et par là-même une liaison protégée contre l'inversion de polarité entre la première et la seconde unité de commande est établie.
